# EUROPÄISCHE PATENTSCHRIFT

(11) **EP 3 134 846 B1**
(45) Veröffentlichungstag und Bekanntmachung des Hinweises auf die Patenterteilung: **03.04.2024**
(21) Anmeldenummer: 15720296.1
(22) Anmeldetag: 22.04.2015
(51) Int. Cl.: G06V 40/12, G06V 40/40, G07F 17/32, G07C 9/37

(54) **ANORDNUNG UND VERFAHREN ZUR IDENTIFIKATION VON FINGERABDRÜCKEN**
ARRANGEMENT AND METHOD FOR IDENTIFYING FINGERPRINTS
SYSTÈME ET PROCÉDÉ D'IDENTIFICATION D'EMPREINTES DIGITALES

(30) Priorität: 23.04.2014 AT 503002014; 30.05.2014 DE 102014008160
(43) Veröffentlichungstag der Anmeldung: 01.03.2017
(73) Patentinhaber: Novomatic AG, 2352 Gumpoldskirchen (AT)
(72) Erfinder: HOMER, Alois, 2352 Gumpoldskirchen (AT)
(74) Vertreter: Evans, Gary
(86) Internationale Anmeldenummer: PCT/EP2015/058742
(87) Internationale Veröffentlichungsnummer: WO 2015/162189

(56) Entgegenhaltungen:
- EP-A1- 0 976 897
- EP-A1- 1 708 135
- WO-A1-2010/051041

## Beschreibung

### TECHNISCHES GEBIET

Die vorliegende Erfindung betrifft eine Anordnung zur Identifikation von Fingerabdrücken mit zumindest einem Fingerabdruck-Sensor und zumindest zwei Elektroden, wobei mit dem Fingerabdruck-Sensor ein Fingerabdruck erfassbar ist. Weiterhin bezieht sich die Erfindung auf ein zugehöriges Verfahren zur Identifikation von Fingerabdrücken.

### STAND DER TECHNIK

Heutzutage werden bei Zutrittsberechtigungssystemen wie z.B. Drehkreuzen, Zutrittsschranken, etc. oder in Zugriffsberechtigungssystemen für eine Identifikation von Personen und damit zur Überprüfung von Zutritts- und/oder Zugriffsberechtigungen Fingerabdruck-Sensoren eingesetzt. Weiterhin können Fingerabdruck-Sensoren auch bei mobilen Geräten wie z.B. Smartphones, Laptops, Tablet PCs, etc. verwendet werden, um beispielsweise Berechtigungen zur Nutzung dieser Geräte zu prüfen bzw. den Zugriff auf diese Geräte auf eine oder mehrere berechtigte Personen zu beschränken. Insbesondere können Fingerabdruck-Sensoren auch bei Spiel- und/oder Unterhaltungs- und/oder Wettautomaten, wie sie in Casinos oder Spielhallen Verwendung finden, eingesetzt werden oder sie können bei geld- bzw. geldwertmäßig betätigten Geräten (z.B. Verkaufsautomaten zum Verkauf von z.B. Waren oder Spieljetons) zur Identifikation und für eine Überprüfung von Berechtigungen, etc. verwendet werden.

Der Fingerabdruck-Sensor dient üblicherweise bei der jeweiligen Verwendung der Nutzeridentifikation, wobei von einem Fingerabdruck-Sensor biometrische Daten wie z.B. ein Abdruck eines Daumens oder einer Fingerkuppe einer Person optisch oder elektrisch - meist kapazitiv - eingelesen bzw. erfasst werden. Die erfassten biometrischen Daten bzw. Fingerabdrücke können dann in verschiedener Art und Weise verwendet werden. So kann beispielsweise eine mit dem Fingerabdruck-Sensor verbindbare Freischaltvorrichtung in Abhängigkeit vom erfassten Fingerabdruck z.B. eine Gerätefunktion freigeben, einen Zugriff auf ein jeweiliges Gerät zulassen bzw. eine Gerätesperre aufheben oder einen Zutritt zu einem Bereich zulassen bzw. eine Zugangsschranke freigeben, wenn der erfasste Fingerabdruck einem gespeicherten Fingerabdruck entspricht oder diesem ausreichend nahekommt. Umgekehrt kann bei einer ausreichend großen Abweichung eines erfassten Fingerabdrucks von gespeicherten Fingerabdrücken beispielsweise ein Zutritt, ein Zugriff oder die Nutzung eines Geräts verweigert werden. Insbesondere bei Spiel- und/oder Unterhaltungs- und/oder Wettautomaten oder bei mobilen Geräten wie z.B. Smartphones, Tablet PCs, Laptops, etc. kann mit Hilfe des Fingerabdrucks geprüft werden, ob eine berechtigte oder eine gesperrte bzw. nicht berechtigte Person versucht, das jeweilige Gerät zu betätigen oder zu nutzen.

Eine wesentliche Voraussetzung für die Identifikation von Personen bzw. für die Überprüfung von Berechtigungen ist dabei die Fälschungssicherheit. Insbesondere muss verhindert werden, dass durch nicht berechtigte Personen beispielsweise mit nachgemachten Fingern, mit abgeschnittenen Fingern oder mit falschen Fingerabdrücken, welche z.B. mittels einer Folie auf die Finger aufgebracht werden, Zutritts-, Zugriffs- oder Nutzungsberechtigungen für Geräte, etc. erlangt werden. Daher ist es wesentlich, zusammen mit dem Fingerabdruck auch zu überprüfen, ob die Person mit diesem Fingerabdruck lebt bzw. ob eventuell auf den Finger z.B. eine Folie mit gefälschten Fingerabdrücken aufgeklebt worden ist, um die entsprechenden Berechtigungen vorzutäuschen. Für eine so genannte Lebenderkennung können beispielsweise verschiedene Methoden zur elektronischen Personenidentifikation angewendet werden, mit denen zusätzlich zur Aufnahme eines Fingerabdrucks festgestellt werden kann, ob die zugehörige Person lebt. Dazu können beispielsweise eine Pulsfrequenz oder elektrokardiographische Signale aufgenommen oder z.B. eine Hauttemperatur, mechanische Eigenschaften der Hautoberfläche, Blutdruck, etc. gemessen werden.

Aus der Schrift EP 0 853 795 B1 ist ein Fingerabdrucksensor mit Detektor zur Lebenderkennung bekannt, bei welchem eine Impedanzmessung einer auf dem Fingerabdruck-Sensor aufgelegten Fingerkuppe durchgeführt wird. Dafür sind auf der Auflagefläche des Sensors Zweipunktelektroden vorgesehen, welche streifenförmig ausgeführt und verzahnt angeordnet sind. Mit Hilfe dieser sehr dicht beieinanderliegenden Elektroden wird dann eine Dielektrizitätskonstante bei verschiedenen Frequenzen einer angelegten Spannung gemessen. Der in der Schrift EP 0 853 795 B1 weist allerdings einen relativ komplexen Aufbau der Elektroden auf. Weiterhin kann es beispielsweise bei einer ungenauen Positionierung, bei geringen Bewegungen des aufgelegten Fingers oder durch Verschmutzungen auf dem Sensor aufgrund der relativ geringen Distanz zwischen den Elektroden leicht zu Messfehlern und/oder fehlerhaften Messungen kommen, welche gegebenenfalls wiederholt werden müssen.

In der Schrift EP 1 094 750 B1 wird ein Verfahren zur Lebenderkennung menschlicher Haut beschrieben, bei dem ein Bereich einer Hautoberfläche wie z.B. eine Fingerkuppe in Kontakt mit einem oder zwei voneinander isolierten elektrischen Leitern gebracht wird, bei welchem ein elektrisches Potential einer Überlagerung von Frequenzen aus einem vorgegebenen Intervall angelegt wird. Der eine oder die zwei elektrischen Leiter können beispielweise in einer Auflagefläche zur Aufnahme eines Fingerabdrucks angebracht sein. Mit dem elektrischen Leiter wird zuerst eine Referenzkennlinie für jede zu identifizierende Person aufgenommen, von welcher eine Frequenzabhängigkeit eines ohmschen Widerstands oder eines Absolutbetrags einer Impedanz wiedergegeben wird. Diese Referenzkennlinie wird dann für die Lebenderkennung zum Vergleich mit einer aufgenommenen Kennlinie der zu identifizierenden Person herangezogen. D.h. es wird für jede zu identifizierende Person neben z.B. einem Fingerabdruck auch eine Referenzkennlinie für die Lebenderkennung aufgenommen. Dies führt zu einem relativ aufwendigen Registrierungsverfahren, bei dem neben dem Fingerabdruck auch eine Referenzkennlinie oder zumindest ausgewählte Impedanzwerte für die Referenzkennlinie in einem vorgegebenen Wechselspannungsfrequenzbereich aufgezeichnet und abgespeichert werden müssen.

Die Schrift WO 2010/051041 beschreibt eine Vorrichtung sowie ein Verfahren zur Identifikation von falschen Fingerabdrücken, wobei Abdrücke von einzelnen oder mehreren Fingern oder größeren Hautbereichen aufgenommen werden. Bei der Vorrichtung sind dazu mehrere Elektroden in der Auflagefläche für die Finger angeordnet. Mit diesen Elektroden werden elektrische Signale zur Verfügung gestellt und es wird dann anhand von detektierten elektrischen Signalen z.B. durch Bestimmung der elektrischen Impedanz festgestellt, ob der oder die aufgenommenen Finger echt sind oder nicht. Allerdings können die Elektroden in beliebiger Konfiguration (z.B. als Elektrodenfeld, zugeordnet zu bestimmten Fingern, etc.) auf der Auflagefläche angeordnet sein, wobei bei Aufnahmen von mehreren Fingern für jeden aufzunehmenden Finger eine rechteckig angeordnete Gruppe von Elektroden vorgesehen ist und jeder der aufzunehmenden Finger auf Echtheit überprüft wird. Dies führt allerdings zu einem relativ komplexen Aufbau der Vorrichtung und einem großen Aufwand beim der Identifikation von falschen Fingerabdrücken, da jeder Finger mittels einer eigenen Elektrodengruppe auf Echtheit überprüft wird. Weiterhin kann sich die Positionierung der Finger auf den jeweiligen Elektrodengruppen für den Nutzer schwierig gestalten bzw. ein nicht korrektes oder exaktes Auflegen der Finger zu Messfehler und/oder Fehlmessungen führen.

### DARSTELLUNG DER ERFINDUNG

Der vorliegenden Erfindung liegt daher die Aufgabe zugrunde, eine Anordnung sowie ein Verfahren der eingangs genannten Art anzugeben, durch welche die Nachteile des Standes der Technik vermieden und letzterer in vorteilhafter Weise weitergebildet wird - insbesondere soll auf einfache Weise und ohne aufwendigen Aufbau die Sicherheit bei der Identifikation von Fingerabdrücken erhöht und eine Fehleranfälligkeit durch eine einfache Handhabung reduziert werden.

Erfindungsgemäß wird die Aufgabe durch eine Anordnung sowie eine Verfahren der eingangs genannten Art mit den Merkmalen der unabhängigen Ansprüche gelöst. Vorteilhafte Ausführungsformen der vorliegenden Erfindung sind in den abhängigen Ansprüchen beschrieben.

Erfindungsgemäß erfolgt die Lösung der Aufgabe durch eine Anordnung der eingangs angeführten Art, bei welcher eine erste Elektrode von einer Handablagefläche beabstandet in der Nachbarschaft zu dieser Handablagefläche derart angeordnet ist, dass bei Anlegen von Zeige-, und/oder Mittel-, und/oder Ring-, und/oder kleinem Finger einer Hand an dieser Handablagefläche der Daumen dieser Hand an die erste Elektrode legbar ist. Die erste Elektrode kann daher auch als Daumen-Elektrode bezeichenbar sein. Weiterhin ist zumindest eine zweite Elektrode derart auf der Handablagefläche angebracht, dass zumindest ein Finger aus Zeige-, Mittel-, Ring- oder kleinem Finger auf zumindest der zweiten Elektrode anlegbar ist. Die zumindest eine zweite Elektrode kann auch als Finger-Elektrode bezeichnet werden. Ein Fingerabdruck-Sensor, mit welchem ein Fingerabdruck erfassbar ist, und die erste Elektrode und/oder die zumindest eine zweite Elektrode sind dabei jeweils als Einheit ausgeführt. D.h. es kann entweder der ersten Elektrode oder der zumindest einen zweiten Elektrode ein Fingerabdruck-Sensor zugeordnet sein, von welchem dann ein Abdruck des jeweiligen Fingers (z.B. Daumen oder Zeigefinger) erfassbar ist, oder es sind den zumindest zwei Elektroden (d.h. erster und zumindest zweiter Elektrode) je ein Fingerabdruck-Sensor zugeordnet, wobei in diesem Fall Abdrücke von z.B. zumindest zwei Fingern (z.B. Daumen und Zeigefinger) erfassbar sind. Weiterhin umfasst die Anordnung eine Messeinheit zum Anlegen und Auswerten von elektrischen Signalen zwischen den zumindest zwei Elektroden. Die Elektroden sind dabei mit der Messeinheit über voneinander elektrisch getrennte Leitungen gekoppelt. Mit der Anordnung ist auf einfache Weise ein Identifikationsergebnis ermittelt werden, welches beispielsweise aus einem mit dem Fingerabdruck-Sensor erfassten Fingerabdruck und aus von der Messeinheit erfassten Signalen bestehen kann.

Der Hauptaspekt der Anordnung zur Identifikation von Fingerabdrücken besteht darin, dass durch die Anordnung von erster Elektrode und der zumindest zweiten Elektrode sowie der Zuordnung eines Fingerabdruck-Sensors zu zumindest einer der beiden Elektroden eine einfache Handhabung durch den Nutzer ermöglicht und damit fehlerhafte Messungen und/oder Wiederholungen von Messungen reduziert werden. Die erste Elektrode, welche z.B. mit dem Fingerabdruck-Sensor als Einheit ausgeführt sein kann, ist neben der Handablagefläche so angeordnet, dass ein sich von dieser Handablagefläche weg ersteckender Daumen mit der Daumenkuppe auf der ersten Elektrode bzw. auf einer Einheit aus Fingerabdruck-Sensor und erster Elektrode zu liegen kommt. Werden die restlichen Finger derselben Hand auf die Handablagefläche gelegt, so wird zumindest einer der restlichen Finger an die zumindest eine zweite Elektrode angelegt, wobei alternativ zur ersten Elektrode der Fingerabdruck-Sensor der zumindest einen zweiten Elektrode zugeordnet bzw. mit dieser eine Einheit bilden kann.

Optional können auch den zumindest zwei Elektroden je ein Fingerabdruck-Sensor zugeordnet sein, so kann auf einfache Weise z.B. die Identifikation eines Nutzers verbessert und z.B. eine Fehlerrate reduziert, da für die Identifikation Abdrücke von zumindest zwei Fingern herangezogen werden können. Es kann beispielsweise neben einem Abdruck des Daumens, welcher z.B. durch eine Einheit aus erster Elektrode und Fingerabdruck-Sensor erfassbar ist, auch von einer weiteren Einheit aus einem weiteren Fingerabdruck-Sensor und der zumindest einen zweiten Elektrode ein Abdruck eines weiteren Finger (z.B. des Zeigefingers) erfassbar sein. Ist dann einer der erfassten Fingerabdrücke nicht von akzeptabler Qualität, so kann beispielsweise der zumindest eine weitere, erfasste Fingerabdruck herangezogen werden und bei entsprechender Qualität der Nutzer identifiziert werden. Dadurch können auch Wiederholungen von Messungen und/oder der Erfassung von Fingerabdrücken vermieden oder zumindest reduziert werden.

Die Beabstandung der ersten Elektrode von der Handablagefläche ist bei der vorliegenden Erfindung vorteilhafterweise auf die übliche Daumenreichweite einer durchschnittlich großen Hand begrenzt. Eine für die Identifikation korrekte Positionierung von Daumen und restlichen Fingern erfolgt damit für den Nutzer intuitiv und auf einfache Weise, wodurch auch Messfehler und/oder Fehlmessungen reduziert werden. Die Identifikation des Fingerabdrucks inklusive einer Lebenderkennung kann daher mit geringem Zeitaufwand durchgeführt und die Sicherheit z.B. von Überprüfungen für Nutzungsfreigaben, Zutritts- und/oder Zugriffsberechtigungen gesteigert werden.

Es ist vorteilhaft, wenn die Handablagefläche als Handgriff ausgestaltet ist, der mit dem Zeige-, und/oder Mittel- und/oder Ring- und/oder kleinem Finger der Hand umgreifbar ist. Durch das Umgreifen des Handgriffs wird der Nutzer intuitiv zu einer für die Identifikation des Fingerabdrucks korrekte Positionierung von Daumen und restlichen Finger geführt. Durch das Umgreifen des Handgriffs ist automatisch zumindest ein Finger aus Zeige-, Mittel-, Ring- und kleinem Finger auf der zumindest zweiten Elektrode angelegt. Der vom umgriffenen Handgriff weg gestreckte Daumen wird dabei quasi von selbst (aufgrund der Handgeometrie) auf die erste Elektrode bzw. die Einheit aus Fingerabdruck-Sensor und erste Elektrode zu liegen kommen, wobei die erste Elektrode beispielsweise unmittelbar-d.h. in üblicher Daumenreichweite einer durchschnittlich großen Hand - neben dem Handgriff oder auch direkt am Handgriff auf einer dem Nutzer zugewandten Seite des Handgriffs angebracht sein kann.

Gemäß einem weiteren Aspekt der vorliegenden Erfindung kann die Handablagefläche auf einer Gerätegehäuseseite - z.B. bei Anwendung der Anordnung in einem mobilen Geräte (z.B. Smartphone, Tablet PC, etc.) oder in einem Unterhaltungsspielgerät oder Spielautomaten - vorgesehen sein. Diese Gerätegehäuseseite ist zu einer weiteren Gerätegehäuseseite geneigt angeordnet, wobei die die erste Elektrode bzw. die Einheit aus Fingerabdruck-Sensor und erste Elektrode an der weiteren Gerätegehäuseseite angebracht ist. Insbesondere können die beiden Gehäuseseiten, auf denen einerseits die genannte Handauflagefläche und andererseits die erste Elektrode bzw. die Einheit aus Fingerabdruck-Sensor und erste Elektrode angeordnet sind, zu einander zumindest näherungsweise rechtwinklig ausgerichtet sein. Auch bei dieser Weiterbildung der Erfindung ist die Handhabung für den Benutzer sehr einfach. Während beispielsweise die ausgestreckten Finger einer Hand auf der einen Gerätegehäuseseite aufliegen und die zweite Elektrode von zumindest einem der Finger berührt wird, kann der Daumen sozusagen in natürlicher Haltung um eine Gehäuseecke greifen und sozusagen um die Gehäusekante herum auf der die erste Elektrode bzw. die Einheit aus Fingerabdruck-Sensor und erste Elektrode aufliegen.

Insbesondere bei einer Anwendung der Anordnung in einem mobilen Gerät wie z.B. Smartphone, Tablet PC, etc. kann die erste Elektrode bzw. die Einheit aus Fingerabdruck-Sensor und erste Elektrode aber auch auf einer Gerätegehäusevorderseite - d.h. auf jener Gerätegehäuseseite, welche z.B. ein Display, Bedientasten, etc. aufweist - angebracht sein. Die Handauflagefläche mit der zweiten Elektrode kann dann z.B. auf der Gerätegehäuserückseite angeordnet sein, sodass beim in die Handnehmen des mobilen Geräts der Daumen sozusagen in natürlicher Haltung auf der erste Elektrode bzw. die Einheit aus Fingerabdruck-Sensor und erste Elektrode auf der Vorderseite des Geräts und die restlichen Finger der Hand sozusagen ebenfalls in natürlicher Haltung auf der Handablagefläche und damit auf der zweiten Elektrode auf der Rückseite des Geräts positioniert werden. Auch bei der vorteilhaften Anwendung der Anordnung in einem mobilen Gerät kann ein Fingerabdruck-Sensor entweder der ersten oder der zumindest einen zweiten Elektrode zugeordnet sein oder es können sowohl die erste als auch die zumindest eine zweite Elektrode mit je einem Fingerabdruck-Sensor eine Einheit bilden.

Um die Anordnung gleichermaßen für die linke und die rechte Hand passend verwenden zu können, kann jeweils die erste Elektrode bzw. die Einheit aus Fingerabdruck-Sensor und erste Elektrode symmetrisch zu einer Mittelachse der Handablagefläche angebracht sein. So kann beispielsweise bei einer als horizontaler Handgriff ausgeführten Handablagefläche eine erste Elektrode linksseitig und eine weitere Elektrode wie die erste Elektrode rechtsseitig beabstandet in Nachbarschaft zu diesem Handgriff angebracht sein. Damit kann die Anordnung sehr einfach sowohl mit der linken als auch mit der rechten Hand genutzt werden. Ist in den links- wie rechtsseitig von der Handablagefläche angeordneten ersten bzw. Daumen-Elektroden jeweils ein Fingerabdruck-Sensor integriert, so kann auf einfache Weise sowohl mit der linken als auch mit der rechten Hand eine Identifikation der Fingerabdrücke durchführbar sein.

Alternativ kann aber auch jeweils eine an die jeweilige Hand entsprechend angepasste Handablagefläche symmetrisch zu einer Mittelachse der ersten Elektrode angeordnet sein. D.h. es kann beispielsweise mit der linken Hand eine erste Handablagefläche genutzt werden, wobei der Daumen dieser Hand auf der ersten Elektrode zum Liegen kommt. Mit der rechten Hand kann z.B. eine an der Mittelachse der ersten Elektrode gespiegelt angeordnete Handablagefläche verwendet werden. Der Daumen der rechten Hand wird bei Ablegen von Zeige-, Mittel-, Ring- und kleinem Finger auf der zweiten Handablagefläche intuitiv bzw. automatisch auf die erste Elektrode gelegt.

In vorteilhafter Weiterbildung der Erfindung ist die erste Elektrode nicht starr in einer festen Position relativ zur Handauflagefläche angeordnet bzw. ausgerichtet, sondern beweglich angeordnet bzw. beweglich gelagert, um in individuell, das heißt für den jeweiligen Benutzer und dessen Hand passende Stellungen verbracht werden zu können. Die erste Elektrode kann dabei idealerweise z.B. drehbar und/oder kippbar und/oder translatorisch verschiebbar gelagert sein.

Die erste Elektrode kann beispielsweise um zumindest eine Drehachse verdrehbar oder kippbar gelagert sein, wobei eine Verkippbarkeit um eine Kippachse vorgesehen sein kann, die zumindest näherungsweise senkrecht zur Auflagefläche der ersten Elektrode bzw. des Fingerabdruck-Sensors, wenn dieser z.B. mit der ersten Elektrode eine Einheit bildet, ausgerichtet ist, und/oder um eine Kippachse, die zumindest näherungsweise parallel zu einer Ebene, in der die Ablagefläche der ersten Elektrode bzw. des Fingerabdruck-Sensors, wenn dieser z.B. der ersten Elektrode zugeordnet ist, liegt oder an die sich die Ablagefläche anschmiegt, ausgerichtet ist,. Beispielsweise kann die erste Elektrode bei Anordnung an einer aufrechten Gerätegehäuseseite um eine aufrechte Kippachse verkippbar und/oder um eine liegende Kippachse, die sich parallel zu der aufrechten Gerätegehäuseseite, an der die erste Elektrode angeordnet ist, erstreckt, verkippbar bzw. verdrehbar sein. Alternativ oder zusätzlich zu den genannten aufrechten und liegenden Kippachsen kann die erste Elektrode auch um eine liegende, im Wesentlichen senkrecht zu der Gerätegehäuseseite, an der erste Elektrode angeordnet ist, sich erstreckende Kippachse verkippbar bzw. verdrehbar sein.

Alternativ oder zusätzlich zu einer solchen Kipp- bzw. Drehbarkeit kann die erste Elektrode oder eine Einheit aus Fingerabdruck-Sensor und erster Elektrode, wenn der Fingerabdruck-Sensor beispielsweise der ersten Elektrode zugeordnet ist, auch translatorisch verschiebbar gelagert sein, insbesondere in einer Ebene näherungsweise parallel zu der Gerätegehäuseseite, an der die erste Elektrode bzw. die Einheit aus Fingerabdruck-Sensor und erster Elektrode vorgesehen ist. Beispielsweise kann die erste Elektrode bzw. die Einheit aus Fingerabdruck-Sensor und erster Elektrode, wenn der Fingerabdruck-Sensor mit der ersten Elektrode eine Einheit bildet, an einer aufrechten Gerätgehäusevorderseite nach oben und unten und/oder nach rechts und links verschiebbar sein, um eine optimale Position relativ zum Handablagefläche für die weiteren Finger sein. Ist die erste Elektrode an einer liegend ausgerichteten Gerätegehäusseite angeordnet, kann die erste Elektrode bzw. die Einheit aus Fingerabdruck-Sensor und erster Elektrode, wenn der Fingerabdruck-Sensor mit der ersten Elektrode eine Einheit bildet, nach rechts und links und/oder nach vorne und hinten verschieblich sein.

Es ist weiterhin günstig, wenn die erste Elektrode und die zumindest eine zweite Elektrode aus einem lichtdurchlässigen Material hergestellt ist. Dadurch kann die jeweilige Elektrode - d.h. die erste oder die zumindest eine zweite Elektrode oder die zumindest zwei Elektroden - auf einfache Weise jeweils mit einem Fingerabdruck-Sensor eine Einheit bilden, ohne dessen Funktion bzw. das Erfassen von Fingerabdrücken zu stören oder zu behindern. Die jeweilige Elektrode kann beispielsweise auf dem jeweils vorgesehenen Fingerabdruck-Sensor angebracht sein. Weiterhin kann auf diese Weise eine Lebenderkennung annähernd parallel zum Erfassen eines Fingerabdrucks durch den Fingerabdruck-Sensor oder unmittelbar nach dem Erfassen durchgeführt werden.

Idealerweise kann auch die zumindest eine zweite Elektrode einen weiteren, d.h. zweiten Fingerabdruck-Sensor umfassen. Damit ist beispielsweise neben dem Abdruck des Daumens, welche durch die Einheit aus Fingerabdruck-Sensor und erster Elektrode erfassbar ist, zumindest noch ein Abdruck eines weiteren Fingers erfassbar. Auf diese Weise wird z.B. die Identifikation eines Nutzers verbessert und z.B. eine Fehlerrate reduziert, da für die Identifikation Abdrücke von zumindest zwei Fingern herangezogen werden können. Ist beispielsweise ein erfasster Fingerabdruck nicht von akzeptabler Qualität, so kann beispielsweise der zumindest zweite, erfasste Fingerabdruck herangezogen werden und bei entsprechender Qualität der Nutzer identifiziert werden. Dadurch können auch Wiederholungen von Messungen und/oder der Erfassung von Fingerabdrücken vermieden oder zumindest reduziert werden.

In einer vorteilhaften Weiterbildung der Erfindung ist die zumindest eine zweite Elektrode als Krafteinwirkungs-Detektier-Einheit, insbesondere z.B. als Druckschalter oder Drucksensor, ausgeführt. Dabei sind die elektrischen Signale von der Messeinheit erst bei einer mit dem entsprechenden Finger ausgeübten Krafteinwirkung auf die Krafteinwirkungs-Detektier-Einheit an der jeweiligen Elektrode anlegbar oder abgreifbar bzw. auswertbar. Optional kann auch die erste Elektrode als Krafteinwirkungs-Detektier-Einheit ausgeführt sein. Durch die Ausführung der zumindest zweiten Elektrode als Krafteinwirkungs-Detektier-Einheit erfolgt eine Identifikation des Fingerabdrucks erst, wenn mit dem entsprechenden an der zweiten Elektrode angelegten Finger eine Kraft auf die Kontaktfläche angewendet wird. Die Krafteinwirkungs-Detektier-Einheit kann beispielsweise auf Federkraft-Rückstellung basieren und als Druckschalter ausgeführt sein. Alternativ kann beispielsweise ein kraftmessender, elektrischer Widerstand wie z.B. ein so genannter Force-Sensing Resistor (FSR) verwendet und die Krafteinwirkungs-Detektier-Einheit damit als Drucksensor ausgeführt sein. Ein Anlegen oder Abgreifen bzw. Auswerten der elektrischen Signale an die Elektroden erfolgt erst dann, wenn beispielsweise ein Druck-Schwellwert oder ein Schwellwert des elektrischen Widerstands erreicht worden ist. Damit wird die Sicherheit der Anordnung gegen Manipulation zusätzlich erhöht, da beispielsweise mit einem gänzlich künstlichem Finger oder einer gänzlich künstlichen Hand, auf welche Fingerabdrücke zu Manipulationszwecken aufgebracht worden sind, ein derartiger Kraftaufwand nicht ohne weiteres möglich ist.

Idealerweise ist die Anordnung in einem Gerät wie z.B. einem Unterhaltungsspielgerät oder Spielautomaten einsetzbar, um beispielsweise die Identität und Berechtigungen eines Nutzers auf einfache, rasche Weise und sicher zu überprüfen. Bisweilen ist an Spielautomaten oder anderen Geräten der eingangs genannten Art eine Ablagefläche für die Finger einer offenen Hand, das heißt Zeige-, Mittel-, Ring- und/oder kleinen Finger vorgesehen, sodass der Benutzer des Geräts die flache Hand auf der genannten Auflagefläche ablegen kann. Durch Wahl eines geeigneten Abstands zwischen der Handablagefläche, insbesondere des Handgriffs, mit der zumindest einen zweiten Elektrode und der ersten Elektrode kann in vorteilhafter Weise bei einem Einsatz der Anordnung in einem Spiel- oder Unterhaltungsgerät gegebenenfalls indirekt eine Altersbeschränkung realisiert werden. Der Abstand zwischen der Handablagefläche und der ersten Elektrode wird dabei z.B. auf eine durchschnittliche Daumenlänge einer Hand eines Erwachsenen, vorzugsweise 60 bis 80 Millimeter, dimensioniert. Dadurch können beispielsweise vor allem Kinder oder Jugendliche beim Anlegen der Hand an die Handablagefläche bzw. bei Umgreifen des Handgriffs dann den Daumen nicht mehr an die erste Elektrode anlegen, da der Abstand zu groß ist. In weiterer Folge kann dadurch das Gerät beispielsweise nicht in Betrieb gesetzt werden.

Weiterhin können an der Auflagefläche Bedientasten vorgesehen sein - wie z.B. ein Druckschalter oder ein Wippschalter, mit welchem Gerätefunktionen steuerbar sind. Dabei kann beispielsweise die zumindest eine zweite Elektrode in die jeweilige Bedientaste integriert oder an dieser angebracht sein. Weiterhin kann eine solche Auflagefläche an einem liegenden Gehäuseabschnitt vorgesehen sein, wie z.B. einem liegend ausgerichteten Keyboard-Abschnitt. Alternativ kann eine solche Ablagefläche für die ausgestreckten Finger einer Hand auch an einer aufrechten Seitenfläche angeordnet sein, beispielsweise um an einem Flipper-Automaten, an dem rechts und links seitlich die Betätigungstasten für die Flipper-Flügel angebracht sind, die Flipper-Flügel betätigen zu können.

Die erste Elektrode und die genannte Handablagefläche mit der zumindest zweiten Elektrode, wobei zumindest einer der zumindest zwei Elektroden ein Fingerabdruck-Sensor zugeordnet ist, sowie die Messeinheit können unmittelbar am/im Gerätegehäuse des Spielautomaten bzw. des Hauptgerätes angeordnet sein. In alternativer Weiterbildung der Erfindung kann das erste Elektrode, den zumindest einer der Elektroden zugeordneten Fingerabdruck-Sensor und die Handauflagefläche aufweisende Gerät jedoch auch als separates Eingabegerät ausgebildet sein, in dem auch z.B. die Messeinheit angeordnet ist und das eine Schnittstelle zum Verbinden mit dem Hauptgerät z.B. in Form eines Spielautomaten oder eines PCs aufweist. Die genannte Schnittstelle kann beispielsweise eine serielle Schnittstelle umfassen, beispielsweise in Form einer USB-Schnittstelle oder einer LAN- oder WLAN-Schnittstelle ausgebildet sein.

Weiterhin kann die Anordnung in vorteilhafter Weise auch in einem mobilen Gerät wie z.B. einem Smartphone oder einem Tablet PC einsetzbar sein, um diese beispielsweise vor einem Gebrauch oder Zugriff durch unbefugte Personen zu schützen. Die erste Elektrode bzw. die Einheit aus Fingerabdruck-Sensor und erste Elektrode kann dabei z.B. auf einer Gerätegehäusevorderseite angebracht sein, welche z.B. Display, Bedientasten, etc. umfasst. Idealerweise ist die erste Elektrode bzw. die Einheit aus Fingerabdruck-Sensor und erste Elektrode in eine Bedientaste (z.B. Ein-/Ausschalttaste, etc.) integriert oder auf dieser angebracht. Die Handablagefläche mit der zumindest zweiten Elektrode kann beispielsweise auf einer der Seitenflächen des mobilen Gerätes oder auf der Gerätegehäuserückseite angeordnet sein. Alternativ oder zusätzlich kann die Handablagefläche mit der zweiten Elektrode aber auch auf einer Geräteschutzhülle - einem sogenannten Cover - z.B. seitlich oder auf dessen Rückseite angebracht und z.B. zum mobilen Gerät durchkontaktiert oder elektrisch verbunden sein. Gegebenfalls kann die Geräteschutzhülle auch entsprechend ausgeschnitten sein, damit ein Anlegen von Zeige-, und/oder Mittel-, und/oder Ring-und/oder kleinem Finger an die zumindest eine zweite Elektrode einfach möglich ist. Durch Vorsehen entsprechender Ausschnitte in der Geräteschutzhülle kann weiterhin der Nutzer auf einfache Weise derart angeleitet werden, dass die Finger automatisch auf der zumindest einen zweite Elektrode angelegt werden.

Die Lösung der angegebenen Aufgabe erfolgt weiterhin durch ein Verfahren der eingangs angegebenen Art, bei welchem die erfindungsgemäße Anordnung eingesetzt wird, welche zumindest einen Fingerabdruck-Sensor und zumindest zwei Elektroden sowie eine Messeinheit aufweist, wobei vom Fingerabdruck-Sensor und von einer ersten Elektrode oder vom Fingerabdrucksensor und einer zumindest zweiten Elektrode eine Einheit gebildet werden oder sowohl der ersten als auch der zumindest einen zweiten Elektrode je ein Fingerabdruck-Sensor zugeordnet ist und damit zumindest zwei Einheit aus Elektrode und Fingerabdruck-Sensor gebildet werden. Für eine Identifikation eines Fingerabdrucks wird der Daumen einer Hand an die erste Elektrode und zumindest ein weiterer Finger aus Zeige-, Mittel-, Ring- oder kleinem Finger an die zumindest eine zweite Elektrode angelegt, wobei zumindest einer der Elektrode ein Fingerabdruck-Sensor zugeordnet ist. Dabei ist die zumindest eine zweite Elektrode auf einer Handanlegefläche angebracht, welche von der ersten Elektrode beabstandet in Nachbarschaft - idealerweise in einer üblichen Daumenreichweite einer durchschnittlich großen Hand - angeordnet ist. Mit dem Fingerabdruck-Sensor wird - beispielsweise auf optische oder elektrische - meist kapazitive - Weise oder mittels Ultraschall-Abbildungsmittel - ein Fingerabdruck erfasst. Über die erste und die zumindest eine zweite Elektrode werden an die über den Daumen und Finger angelegten Hand elektrische Signale übertragen und dann von der Messeinheit die durch die an den Elektroden angelegte Hand veränderten, elektrischen Signale erfasst und ausgewertet. Dabei wird anhand der des erfassten Fingerabdrucks und der von der Messeinheit erfassten, elektrischen Signale ein Identifikationsergebnis ermittelt.

Der Hauptaspekt des Verfahrens zur Identifikation von Fingerabdrücken besteht darin, dass auf einfache Weise und in annähernd einem Schritt ein Fingerabdruck eines Nutzer erfasst und eine so genannte Lebenderkennung - d.h. es wird geprüft, ob der erfasste Fingerabdruck von einer lebenden Person stammt - durchgeführt werden kann. Durch einfache Handhabung, also insbesondere durch die definierte Handanlegefläche, wird der Nutzer zu einer korrekten Positionierung für die Fingerabdruck-Identifikation geführt, wodurch fehlerhafte Messungen und/oder Wiederholungen von Messungen reduziert werden können. Die Identifikation des Fingerabdrucks inklusive einer Lebenderkennung kann daher mit geringem Zeitaufwand durchgeführt und die Sicherheit z.B. von Überprüfungen für Nutzungsfreigaben, Zutritts- und/oder Zugriffsberechtigungen gesteigert werden.

Es ist dabei von Vorteil, wenn ein erfasster Fingerabdruck an ein übergeordnetes System wie z.B. ein Computersystem, in welche z.B. Fingerabdrücke berechtigter Personen abgelegt sind, weitergeleitet wird. In diesem übergeordneten System kann dann eine Auswertung und Analyse des erfassten Fingerabdrucks durchgeführt werden. Es kann beispielsweise geprüft werden, ob ein erfasstes Abbild eines Fingerabdrucks eine ausreichend akzeptable Qualität für die Auswertung aufweist. Mangelhafte Qualität kann beispielsweise durch zu geringen Bildkontrast, ein Erfassen eines unzureichenden Bereichs des Fingerabdrucks oder einer ungenügenden Anzahl an so genannten Minutien-Punkten des Fingerabdrucks entstehen. Im Fall nicht ausreichender Qualität des Fingerabdruck-Abbildes kann eine Wiederholung des Erfassens des Fingerabdrucks vorgenommen werden. Weist das erfasste Fingerabdruck-Abbild ausreichende Qualität für die Auswertung und Analyse auf, so kann es vom übergeordneten System weiterverarbeitet werden, um die elektrische Analyse von falschen bzw. gefälschten Fingerabdrücken zu unterstützen.

Eine zweckmäßige Weiterbildung der Erfindung sieht vor, dass die von der Messeinheit über die Elektroden erfassten, veränderten elektrischen Signale von der Messeinheit mit einem vorgegebenen Bereich, insbesondere für Lebenderkennung, verglichen werden. Dabei wird ermittelt, ob die erfassten, elektrischen Signale beispielsweise innerhalb bestimmter Schwellwerte von einer bestimmten Person gelegen sind, welche z.B. bei einer Registrierungsphase dieser Person aufgenommen und gespeichert worden sind, oder allgemein mit Schwellwerten für einen Menschen übereinstimmen. Liegen die erfassten, elektrischen Signale innerhalb der bestimmten oder allgemeinen Schwellwerte bzw. innerhalb des vorgegebenen Bereichs für Lebenderkennung, dann wird der detektierte Finger bzw. der zugehörige Fingerabdruck als real bzw. als echt akzeptiert. Wird eine Abweichung vom vorgegebenen Bereich bzw. den Schwellwerten festgestellt, dann wird der detektierte Finger beispielsweise zur Fälschung erklärt.

Zweckmäßiger Weise kann auf Basis eines Vergleichs der erfassten, elektrischen Signale mit dem vorgegebenen Bereich von der Messeinheit ein Fälschungswert erstellt und z.B. ausgegeben und/oder von der Messeinheit für eine Auswertung und Analyse an das übergeordnete System weitergeleitet werden. Durch den Fälschungswert können der erkannte Finger bzw. die erfassten, elektrischen Signale mit einer Wahrscheinlichkeit für eine Fälschung (z.B. nachgemachter Finger mit aufgebrachtem Fingerabdruck, abgeschnittener Finger, etc.) klassifiziert werden. Damit kann beispielsweise anhand einer Höhe des Fälschungswertes (z.B. Punkteanzahl, Zahlenwert, etc.) eine hohe oder geringe Wahrscheinlichkeit für einen falschen oder so genannten Fake-Finger abgeleitet werden. Mit Hilfe des übergeordneten Systems kann dann auf Basis des Fälschungswertes beispielsweise entschieden werden, ob der Finger als echt akzeptiert oder als gefälscht gewertet wird.

Als elektrische Signale, die über die Elektroden an die angelegten Finger übertragen werden, werden idealerweise Spannungssignale mit variabler Amplitude und/oder Frequenz eingesetzt. Derartige Spannungssignale können beispielsweise sehr einfach mit Hilfe einer Gleichspannungs-(DC)- oder Wechselspannungs-(AC)-Signalquelle (z.B. gepulste Gleichstromquelle, Signalgenerator, etc.) erzeugt werden. Derartige Signalquellen können beispielsweise in die Messeinheit integriert oder von dieser getrennt ausgeführt sein. Die Signale können über Leitungen, mit welchen die Elektroden an z.B. die Messeinheit und/oder an die Signalquelle gekoppelt sind, an eine oder mehrere Elektroden geleitet werden. Idealerweise sind die Leitungen, mit denen die einzelnen Elektroden an die Messeinheit und/oder an die Signalquelle koppelt sind, elektrisch voneinander isoliert, damit sich die elektrischen Signale von/zu den einzelnen Elektroden nicht gegenseitig beeinflussen und gegebenenfalls zu Messfehlern führen. Gemäß einer weiteren Ausführungsform können die Elektroden teils als ESD-Schutz zur Ableitung elektrostatischer Aufladungen verschaltet sein und teils zur Impedanzmessung vorgesehen und mit der Messeinheit verbunden sein.

In einer vorteilhaften Weiterbildung der Erfindung wird zumindest die zumindest eine zweite Elektrode als Krafteinwirkungs-Detektier-Einheit ausgeführt werden. Die elektrischen Signale werden von der Messeinheit erst bei einer mit dem entsprechenden Finger ausgeübten Krafteinwirkung auf die Krafteinwirkungs-Detektier-Einheit an der jeweiligen Elektrode angelegt. Ein Abgreifen oder eine Auswertung der durch die an den Elektroden anliegenden Finger veränderten, elektrischen Signale wird erst bei Überschreiten eines vorgegebenen Schwellwertes für die ausgeübte Krafteinwirkung auf die Krafteinwirkungs-Detektier-Einheit durchgeführt. Optional kann auch die erste Elektrode als Krafteinwirkungs-Detektier-Einheit ausgeführt sein.

Die Krafteinwirkungs-Detektier-Einheit kann beispielsweise auf Federkraft-Rückstellung basieren und als Druckschalter ausgeführt sein. Dann wird als Schwellwert für die Krafteinwirkungs-Detektier-Einheit vorteilhafterweise ein Federdruck-Schwellwert vorgegeben. Alternativ kann beispielsweise ein kraftmessender, elektrischer Widerstand wie z.B. ein so genannter Force-Sensing Resistor (FSR) verwendet werden und die Krafteinwirkungs-Detektier-Einheit damit als Drucksensor ausgeführt sein. D.h. es wird in der als Drucksensor ausgestalteten Krafteinwirkungs-Detektier-Einheit eine passive Komponente verwendet, die als variabler elektrischer Widerstand arbeitet und die z.B. mit zunehmender Krafteinwirkung auf den Sensor ihren Widerstandswert verändert bzw. reduziert. Ein Anlegen oder Abgreifen bzw. Auswerten der elektrischen Signale an die Elektroden erfolgt erst dann, wenn der entsprechende Schwellwert - beispielsweise ein Druck-Schwellwert oder ein Schwellwert des elektrischen Widerstands - erreicht oder überschritten wird. Weiterhin kann eine Anzeigevorrichtung (z.B. LED, etc.) vorgesehen sein, durch welche durch z.B. Aufleuchten, Farbänderung, etc. angezeigt wird, wann der entsprechende Schwellwert der Krafteinwirkungs-Detektier-Einheit erreicht worden ist. Dem Nutzer wird damit eine Rückmeldung gegeben, dass eine weitere Krafteinwirkung auf die Krafteinwirkungs-Detektier-Einheit nicht mehr notwendig ist.

Durch die Ausgestaltung von zumindest der zweiten Elektrode als Krafteinwirkungs-Einheit kann auf einfache Weise die Sicherheit gegen Manipulation zusätzlich erhöht werden. Denn beispielsweise mit einem nachgemachten, künstlichen Finger (z.B. Gummi-Finger) oder einer nachgemachten Hand (z.B. Gummi-Hand), auf welche Fingerabdrücke zu Manipulationszwecken aufbracht wurden, ist eine entsprechende Krafteinwirkung nicht ohne weiteres realisierbar.

### AUSFÜHRUNG DER ERFINDUNG

Die Erfindung wird nachfolgend anhand bevorzugter Ausführungsbeispiele und zugehöriger Zeichnungen näher erläutert. In den Zeichnungen zeigen:
- Figur 1:: eine Gesamtansicht eines Geräts in Form eines Spiel- und/oder Unterhaltungsautomaten, das Bildschirme sowie ein liegend ausgerichtetes Bedienpaneel mit Eingabemitteln umfasst, wobei eine Ausführung nach dem Stand der Technik dargestellt ist, bei der ein Fingerabdruck-Sensor zentral an einer Oberseite des Bedienpanels vorgesehen ist,
- Figur 2:: eine schematische Draufsicht auf die Oberseite eines Gerätegehäuse-Abschnitts, wobei am Gerätegehäuse die erfindungsgemäße Anordnung zur Identifikation von Fingerabdrücken angebracht ist,
- Figur 3:: eine schematische Draufsicht auf einen Gerätegehäuse-Abschnitt ähnlich Figur 2 mit der erfindungsgemäßen Anordnung zur Identifikation von Fingerabdrücken, wobei die Handablagefläche als Handgriff, der von den Fingern einer Hand gegriffen wird, ausgestaltet ist,
- Figur 4:: eine perspektivische Vorderansicht des Gerätegehäuse-Abschnitts aus Figur 3, die beispielhaft eine Positionierung der erfindungsgemäßen Anordnung an der Gerätegehäuse-Vorderseite und eine Positionierung einer Einheit aus Fingerabdruck-Sensor und erster Elektrode relativ zur Handablagefläche zeigt,
- Figur 5:: eine schematische Sicht auf eine Hinterseite einer als Handgriff ausgestalteten Handablagefläche aus Figur 3 bzw. Figur 4,
- Figur 6:: schematisch eine Seitenansicht eines mobilen Gerätes, insbesondere Smartphones, in dem die erfindungsgemäße Anordnung zur Identifikation von Fingerabdrücken zur Anwendung kommt,
- Figur 7:: eine schematische Gesamtansicht eines mobilen Gerätes, insbesondere Smartphones, in dem die erfindungsgemäße Anordnung zur Identifikation von Fingerabdrücken zur Anwendung kommt,
- Figur 8:: schematisch und beispielhaft einen Ablauf des Verfahrens zur Identifikation von Fingerabdrücken mit der erfindungsgemäßen Anordnung.

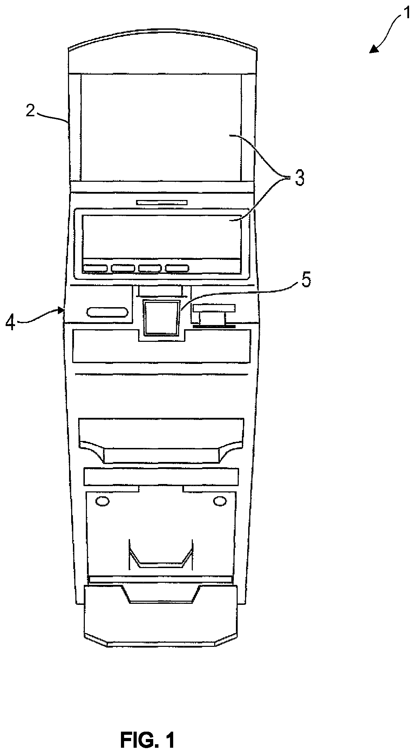

Die Erfindung kann beispielsweise in einem Gerät 1 - wie in Figur 1 schematisch dargestellt - zur Identifikation von Fingerabdrücken eingesetzt werden. Das in Figur 1 dargestellte Gerät 1 kann z.B. als Spiel- und/oder Unterhaltungsspielgerät ausgebildet sein, wie es in Casinos oder Spielhallen Verwendung findet. Das Gerät 1 kann beispielsweise als Standalone-Gerät ausgebildet sein und kann ein Gerätegehäuse 2 umfassen, das - grob gesprochen - näherungsweise kubusförmig, aber auch skulpturenhaft gestaltet sein kann. An dem Gerätegehäuse 2 können ein oder mehrere Bildschirme 3 angeordnet, aber auch andere Anzeigemittel wie z.B. rotierende Walzen vorgesehen sein.

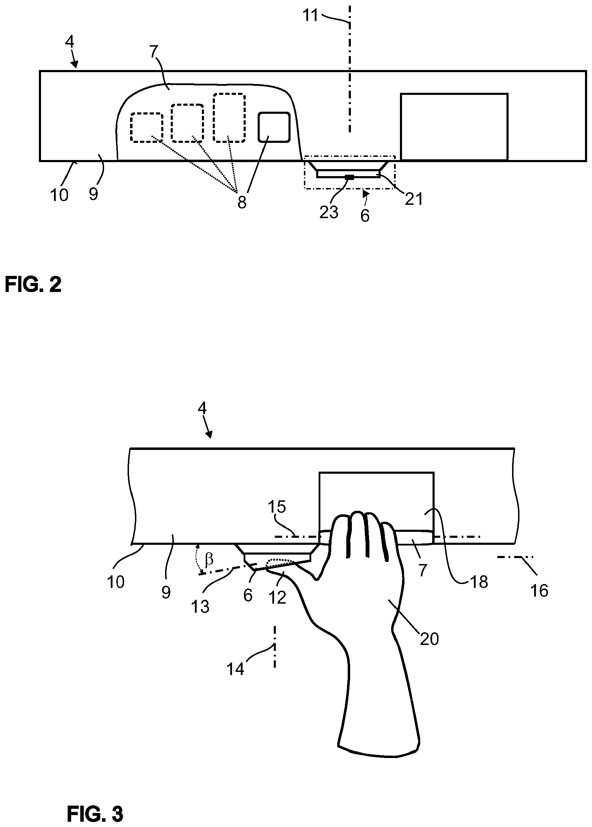

Ein Gerätegehäuse-Abschnitt 4, der vorteilhafterweise liegend ausgerichtet und beispielsweise paneelartig geformt sein kann, kann als Bedienungsabschnitt fungieren, wobei an dem genannten Gerätegehäuse-Abschnitt 4 Eingabemittel z.B. in Form von Bedientasten oder Touchscreen-Elementen vorgesehen sein können. Während bei Gerätschaften 1 des Standes der Technik ein Fingerabdruck-Sensor 5, wie dies Figur 1 zeigt, zentral an einer Oberseite des genannten Gerätegehäuse-Abschnitts 4 leicht ansteigend angeordnet war, weist die erfindungsgemäße Anordnung zur Identifikation von Fingerabdrücken gemäß den Ausführungsbeispielen der Erfindung, die die Figuren 2 bis 5 zeigen, eine spezielle Anbringung bzw. Anordnung auf.

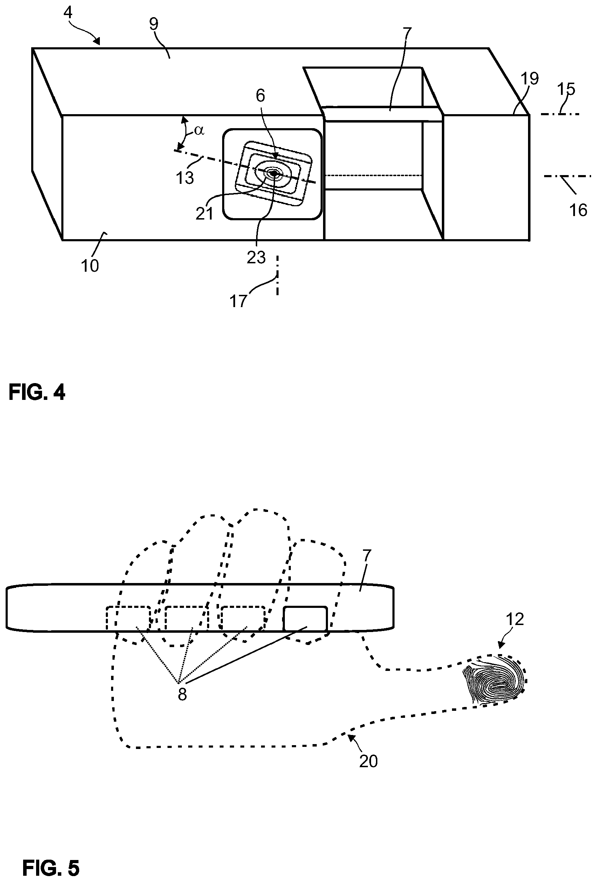

Wie die Figuren 2 bis 4 zeigen, kann der genannte Gerätegehäuse-Abschnitt 4, der insgesamt betrachtet liegend ausgerichtet sein kann, einen Handablagefläche 7 umfassen, die beispielsweise liegend auf einer ersten Gerätegehäuseseite 9 angeordnet sein, welche z.B. eine liegende Oberseite 9 des Gerätegehäuse-Abschnitts 4 bilden kann. Von der Handablagefläche 7 beabstandet, sind eine erste Elektrode 23 und beispielsweise ein der ersten Elektrode 23 zugeordneter Fingerabdruck-Sensor 21 angebracht, wobei die erste Elektrode 23 und der Fingerabdruck-Sensor 21 als Einheit 6 ausgestaltet sind. Die erste Elektrode 23 der Einheit 6 aus Fingerabdruck-Sensor 21 und erster Elektrode 23 ist dabei z.B. aus lichtdurchlässigem Material (Indiumoxid (In₂O₃:Sn), Zinkoxid (ZnO:AI, ZnO:Ga, ZnO:Ti), Zinnoxid (SnO₂:F, SnO₂:Sb, SnO₂:Ta) oder Titanoxid (TiO₂:Nb)) hergestellt, welches für einen abfragenden Lichtstrahl wenigstens teilweise transparent ist. Die Einheit 6 aus Fingerabdruck-Sensor 21 und erster Elektrode 23 kann dabei z.B. auf einer zweiten Gerätegehäuseseite 10 angeordnet sein, die zu der genannten ersten Gerätegehäuseseite 9 geneigt, insbesondere etwa senkrecht angeordnet bzw. näherungsweise rechtwinkelig ausgerichtet sein kann. Insbesondere kann die Einheit 6 aus Fingerabdruck-Sensor 21 und erster Elektrode 23 an einer aufrechten Vorderseite 9 des Gerätegehäuse-Abschnittes 4 vorgesehen sein. Die Einheit 6 aus Fingerabdruck-Sensor 21 und erster Elektrode 23 ist dabei von der Handablagefläche 7 für die Finger beabstandet, insbesondere derart, dass - wie beispielhaft in Figur 3 dargestellt - ein Daumen 12 einer Hand 20, deren Zeige- bis kleinen Finger bestimmungsgemäß auf der Handablagefläche 7 ruhen, in natürlicher Haltung intuitiv auf der Einheit 6 aus Fingerabdruck-Sensor 21 und erster Elektrode 23 zu liegen kommt. Die Einheit 6 aus Fingerabdruck-Sensor 21 und erster Elektrode 23 kann dabei vorteilhafterweise drehbar bzw. verkippbar angeordnet sein. (Die entsprechenden Kippachsen 13, 14, 16 und 17 sind in die Figuren 3 und 4 eingetragen.)

Die beispielhaft in Figur 2 dargestellte Handablagefläche 7 kann z.B. in Form einer leichten Mulde konturiert sein, um die Hand 20 intuitiv in die richtige Stellung zu führen. Beispielsweise kann der Handablagefläche 7 auch ein Eingabemittel z.B. in Form einer Bedientaste zugeordnet sein, über welche z.B. Steuerbefehle für das Gerät 1 eingegeben werden können. Auf der Handablagefläche 7 ist zumindest eine zweite Elektrode 8 angebracht, auf der zumindest ein Finger aus Zeige-, Mittel-, Ring- oder kleinem Finger auf der zumindest zweiten Elektrode 8 anlegbar ist. Die zumindest eine zweite Elektrode 8 kann beispielsweise in ein der Handablagefläche 7 zugeordnetes Eingabemittel integriert oder auf diesem angebracht sein. Anstatt der ersten Elektrode 23 kann die zumindest eine zweite Elektrode 8 den Fingerabdruck-Sensor 21 aufweisen. D.h. der Fingerabdruck-Sensor 21 kann anstatt der ersten Elektrode 23 bzw. der Daumenelektrode 23 eine Einheit 6 mit der zumindest zweiten Elektrode 8 bilden. Es wird dann anstatt eines Abdrucks des Daumens 12 ein Abdruck eines anderen Fingers - z.B. des Zeigefingers - aufgenommen, welcher dann zur Identifizierung herangezogen wird. Alternativ kann die zumindest zweite Elektrode 8 zusätzlich zur ersten Elektrode 23 ebenfalls einen weiteren Fingerabdruck-Sensor 21 aufweisen. Das bedeutet, das von neben dem Abdruck des Daumens 12 für eine genauere Identifizierung zumindest ein weiterer Fingerabdruck eines weiteren Fingers (z.B. des Zeigefingers) der Hand 20 aufgenommen wird. Auch die zumindest zweite Elektrode 8 ist - insbesondere, wenn ein Fingerabdruck-Sensor 21 zugeordnet ist - idealerweise aus lichtdurchlässigem Material hergestellt.

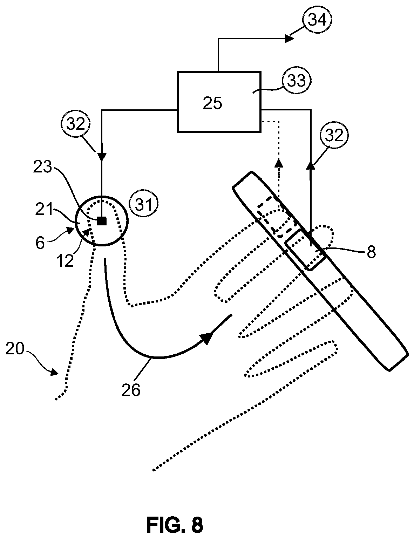

Weiterhin ist eine - in den Figuren 2 bis 4 nicht dargestellte - Messeinheit 25 (vgl. Figur 8) vorgesehen, von welcher elektrische Signale zwischen der ersten Elektrode 23 und der zumindest zweiten Elektrode 8 der Handablagefläche 7 angelegt und ausgewertet werden können. Dabei ist ein Identifikationsergebnis anhand des erfassten Fingerabdrucks mittels der Einheit 6 aus Fingerabdruck-Sensor 21 und erster Elektrode 23 und der erfassten Signale ermittelbar. Weiterhin kann die auf der Handablagefläche 7 angebrachte zumindest zweite Elektrode 8 als Krafteinwirkungs-Detektier-Einheit ausgeführt sein. Gegebenenfalls kann auch die erste Elektrode 23 als Krafteinwirkungs-Detektier-Einheit ausgestaltet sein. Durch eine Ausführung zumindest der zweiten Elektrode 8 als Krafteinwirkungs-Detektier-Einheit sind die elektrischen Signale der Messeinheit 25 erst bei einer mit dem entsprechenden Finger ausgeübten Krafteinwirkung auf die Krafteinwirkungs-Detektier-Einheit anlegbar oder abgreifbar/auswertbar.

Alternativ kann der genannte Gerätegehäuse-Abschnitt 4 auch insgesamt betrachtet stehend ausgerichtet sein. Dabei können die Handablagefläche 7 beispielsweise an einer (seitlichen) senkrechten Gerätegehäuseseite und die Einheit 6 aus Fingerabdruck-Sensor 21 und erster Elektrode 23 an einer senkrechten Vorderseite derart beabstandet angeordnet sein, dass wiederum beim Anlegen der Finger der Hand 20 an die Handablagefläche 7 der Daumen 12 intuitiv auf der Einheit 6 aus Fingerabdruck-Sensor 21 und erster Elektrode 23 zu liegen kommt. Zumindest ein Finger aus Zeige-, Mittel-, Ring- oder kleinem Finger wird bei Anlegen der Hand 20 an die Handablagefläche 7 an die zumindest zweite Elektrode 8 gelegt, wodurch ein Identifikationsergebnis aus erfassten Fingerabdruck und mittels der Messeinheit 25 erfasster Signale ermittelbar ist. Die Gerätegehäuseseite mit der Handablagefläche 7 kann vorzugsweise zu der genannten Gerätegehäuseseite mit der Einheit 6 (aus Fingerabdruck-Sensor 21 und erster Elektrode 23) geneigt angeordnet sein beziehungsweise können sich die Handablagefläche 7 und Einheit 6 auf zwei unterschiedlichen Ebenen befinden, welche zwei Ebenen einen Winkel zueinander haben, so dass der Daumen 12 der Hand bequem auf der Einheit 6 angelegt werden kann, wenn zumindest ein Finger aus Zeige-, Mittel-, Ring- oder kleinem Finger dieser Hand an die Handablagefläche 7 angelegt ist. Eine Schnittgerade der genannten zwei Ebenen kann dabei parallel zu einer Gehäusekante (vorzugsweise eine einer Bedienerseite zugewandten Frontseite) liegen.

Wie beispielhaft in den Figuren 3 bis 5 dargestellt, kann die Handablagefläche 7 auch als Handgriff 7 ausgestaltet sein. Der Handgriff 7 kann z.B. stangenförmig ausgebildet sein und/oder an einer Gehäusekante angeordnet sein, die eine liegende Oberseite 9 und eine aufrechte Vorderseite 10 des Gerätegehäuse-Abschnittes 4 verbindet. Mit anderen Worten, kann der Handgriff 7 parallel zu einer Schnittgeraden einer zur Oberseite 9 parallelen Ebene mit einer zur Vorderseite 10 parallelen Ebene liegen. Der Gerätegehäuse-Abschnitt 4 kann hierbei um den Handgriff 7 herum eine Ausnehmung 18 umfassen, sodass die Hand 20 den Handgriff 7 mit Zeige-, Mittel-, Ring-, und kleinem Fingern umgreifen kann. Der notwendige Freiraum zum Umgreifen des Handgriffes 7 kann jedoch auch durch eine z.B. bogenförmige oder vorspringende Konturierung des Handgriffes 7 erzielt werden, sodass die genannte Ausnehmung 18 nicht zwingend ist. Es kann erwähnt werden, dass die Begriffe "liegend", "stehend" bzw. "aufrecht" als relative Positionsangaben zu verstehen sind, also sich auf ein relatives Bezugssystem des Gerätes beziehen können, oder auf das Bezugssystem Erde.

Wie die Figuren 3 und 4 zeigen, kann dem Handgriff 7 ebenfalls die Einheit 6 aus Fingerabdruck-Sensor 21 und erster Elektrode 23 zugeordnet sein, der quer zur Längsachse 15 des Handgriffes 7 und auch in Richtung der genannten Längsachse 15 von einem Ende des Handgriffes 7 beabstandet angeordnet ist. Insbesondere kann die genannte Einheit 6 mit dem Fingerabdruck-Sensor 21 an der aufrechten Vorderseite 10 des Gerätegehäuse-Abschnittes 4 angeordnet sein, wobei die Einheit 6 bzw. der Fingerabdruck-Sensor 21 und die erste Elektrode 23 ein Stück weit, vorzugsweise eine durchschnittliche Daumenlänge, vorzugsweise 60 bis 80 Millimeter, unterhalb des Handgriffes 7 zu einer Seite hin vom Handgriff 7 weg - gemäß Figur 3 und 4 nach links - angeordnet sein können, sodass ein den Handgriff 7 nicht umgreifender, sondern vom Handgriff 7 weg gespreizter Daumen 12 bei natürlicher, intuitiver Daumenhaltung auf der genannten Einheit 6 aus Fingerabdruck-Sensor 21 und erster Elektrode 23 zu liegen kommt. Durch einen geeigneten Abstand zwischen dem Handablagefläche/Handgriff 7 und der Einheit 6 (bzw. dem Fingerabruck-Sensor 21) kann vorteilhafterweise gegebenenfalls eine indirekte Altersbeschränkung realisiert werden, insofern als dass beispielsweise Kinder oder Jugendliche bei Umgreifen des Handgriffes 7 dann den Daumen 12 nicht mehr an die Einheit 6 bzw. die erste Elektrode 23 bzw. den Fingerabdruck-Sensor 23 anlegen können, da der Abstand zu groß ist. In weiterer Folge kann dadurch das Gerät beispielsweise nicht in Betrieb gesetzt werden.

Die Figur 5 zeigt den Handgriff 7 aus der Figur 3 bzw. 4 aus einer Rückansicht. Wie die Figur 5 insbesondere zeigt, ist sozusagen bei Ausgestaltung der Handablagefläche 7 als Handgriff die zumindest zweite Elektrode 8 beispielsweise an einer Hinterseite des Handgriffes 7 angebracht. Dadurch ist beim Umgreifen des Handgriffs 7 durch Zeige-, Mittel-, Ring- und kleinen Finger der Hand 20 zumindest einer dieser Finger an die zumindest zweite Elektrode 8 angelegt. Ein den Handgriff 7 nicht umgreifender, weg gespreizter Daumen 12 kommt intuitiv auf der Einheit 6 aus Fingerabdruck-Sensor 21 und erster Elektrode 23 zu liegen, wodurch der Fingerabdruck des Daumens 12 sehr leicht vom Fingerabdruck-Sensor 21 der Einheit 6 z.B. optisch oder elektrisch - meist kapazitiv - eingelesen bzw. erfasst werden kann.

Der Abstand der Einheit 6 aus Fingerabdruck-Sensor 21 und erster Elektrode 23 vom genannten Handgriff 7 quer zur Handgriff-Längsachse 15 und/oder in Richtung der Handgriff-Längsachse 15 vom Handgriffende (gemäß Figur 4 nach unten und links bzgl. des Handgriffes 7) beträgt vorteilhafterweise der Beabstandung der Daumenkuppe vom Wurzelgelenk des Zeigefingers, das heißt der üblichen Daumenreichweite bei abgespreiztem Daumen und kann einige wenige Zentimeter betragen.

Wie Figur 3 zeigt, kann die Einheit 6 aus Fingerabdruck-Sensor 21 und erster Elektrode 23 mit einer Hauptachse 13 gegenüber der Handgriff-Längsachse 15 spitzwinklig um einen Winkel α verkippt angeordnet sein, wobei der genannte Winkel α beispielsweise 5 bis 35 Grad betragen kann, insbesondere derart bemessen ist, dass die Hauptachse 13 der Daumen-Längsachse bei natürlicher Daumenhaltung entspricht. Eine derartige Anordnung bzw. spitzwinkelig geneigte Ausrichtung zu der Hauptachse 13 der Einheit 6 aus Fingerabdruck-Sensor 21 und erster Elektrode 23 ist auch bei einer nicht als Handgriff ausgestalteten Handablagefläche 7 - wie beispielhaft in Figur 2 dargestellt - von Vorteil.

Alternativ oder zusätzlich zu der in Figur 4 zu sehenden Verdrehung der Einheit 6 aus Fingerabdruck-Sensor 21 und erster Elektrode 23 in der Ebene der Vorderseite 10 - das heißt um eine Achse senkrecht zu der Vorderseite 10 - kann die Einheit 6 aus Fingerabdruck-Sensor 21 und erster Elektrode 23 mit ihrer Auflagefläche 21 bzw. seiner Hauptachse 13 aus der Vorderseite 10 herausgekippt sein. Diese Verkippung bzgl. einer Vorderseiten parallelen, aufrechten Kippachse 17 zeigt der in Figur 2 zu sehende spitze Winkel β gegenüber der Handgriff-Längsachse 15. Diese Verkippung kann ebenfalls im Bereich von etwa zwei (2) bis 35 Grad liegen. Alternativ oder zusätzlich kann die Einheit 6 aus Fingerabdruck-Sensor 21 und erster Elektrode 23 mit ihrer Auflagefläche auch um eine liegende Kippachse 16 gegenüber der Gerätegehäuse-Vorderseite 9 bzw. der Handgriff-Längsachse 15 verkippt sein.

Die Einheit 6 aus Fingerabdruck-Sensor 21 und erster Elektrode 23 ist vorteilhafterweise in ihrer Ausrichtung bzgl. des Handgriffs 7 bzw. der Handablagefläche 7 nicht starr befestigt, sondern drehbar bzw. kippbar gelagert. Eine Verdrehbarkeit bzw. Kippbarkeit kann dabei bzgl. einer, mehrerer oder aller der vorgenannten Kippachsen 14, 16 und 17 vorgesehen sein, wobei die Verdrehbarkeit derart beschaffen sein kann, dass die Einheit 6 aus Fingerabdruck-Sensor 21 und erster Elektrode 23 in verschiedene Dreh- bzw. Kippstellungen bringbar ist, in denen sie dann selbsttätig bzw. selbsthemmend ihre Stellung hält oder auch durch Fixiermittel fixiert werden kann. Alternativ oder zusätzlich ist auch eine Rückstellung in eine neutrale Ausgangsstellung beispielsweise mittels dem Kippachsen zugeordneten Federmitteln möglich.

In einer weiteren, vorteilhaften Ausgestaltung der Erfindung kann z.B. jeweils eine Einheit 6 aus Fingerabdruck-Sensor 21 und erster Elektrode 23 symmetrisch zu einer Mittelachse der Handablagefläche 7 angebracht sein, um die Anordnung gleichermaßen für die linke und die rechte Hand passend verwenden zu können. So kann beispielsweise bei einer als horizontaler Handgriff ausgeführten Handablagefläche 7 eine Einheit 6 aus Fingerabdruck-Sensor 21 und erster Elektrode 23 linksseitig und eine weitere Einheit 6 aus Fingerabdruck-Sensor 21 und erster Elektrode 23 rechtsseitig beabstandet in Nachbarschaft zu diesem Handgriff 7 angebracht sein.

Alternativ kann aber auch jeweils eine an die jeweilige Hand entsprechend angepasste Handablagefläche 7 symmetrisch zu einer Mittelachse 11 der Einheit 6 aus Fingerabdruck-Sensor 21 und erster Elektrode 23 angeordnet sein. D.h. es kann beispielsweise mit der linken Hand eine erste Handablagefläche 7 genutzt werden. Mit der rechten Hand kann z.B. eine an der Mittelachse 11 der Einheit 6 aus Fingerabdruck-Sensor 21 und erster Elektrode 23 gespiegelt angeordnete Handablagefläche 7 verwendet werden. Der Daumen der jeweiligen Hand 20 wird bei Ablegen von Zeige-, Mittel-, Ring- und kleinem Finger auf der jeweiligen Handablagefläche 7 intuitiv bzw. automatisch auf die Einheit 6 aus Fingerabdruck-Sensor 21 und erster Elektrode 23 gelegt.

Die Einheit 6 aus Fingerabdruck-Sensor 21 und erster Elektrode 23 und die genannte Handablagefläche 7 mit der zumindest zweiten Elektrode 8 sowie die Messeinheit 25 können unmittelbar am/im Gerätegehäuse des Spielautomaten bzw. des Hauptgerätes angeordnet sein. In alternativer Weiterbildung der Erfindung kann das die Einheit 6 aus Fingerabdruck-Sensor und erster Elektrode und die Handauflagefläche 7 aufweisende Gerät jedoch auch als separates Eingabegerät ausgebildet sein, in dem gleichfalls z.B. die Messeinheit 25 angeordnet ist und das eine Schnittstelle zum Verbinden mit dem Hauptgerät z.B. in Form eines Spielautomaten oder eines PCs aufweist. Diese Schnittstelle kann eine drahtgebundene parallele oder serielle Schnittstelle beispielsweise in Form einer USB-Schnittstelle oder RS-232-Schnittstelle sein oder auch eine drahtlos arbeitende Schnittstelle, beispielsweise in Form einer WLAN-Schnittstelle oder Bluetooth- oder auf Basis von Infrarot-Signalen arbeitende IrDA-Schnittstelle oder eine Kombination dieser Schnittstellen sein.

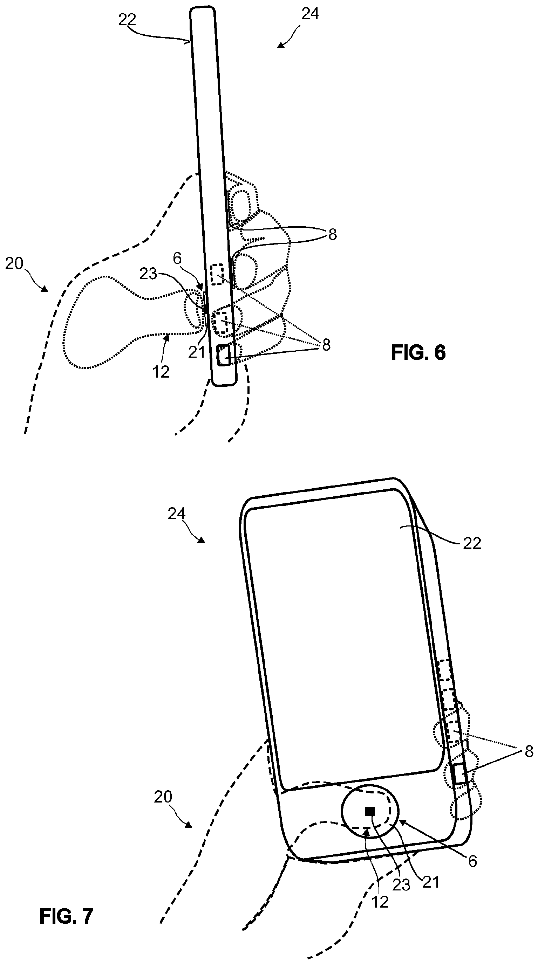

Wie die Figuren 6 und 7 schematisch zeigen, kann die Erfindung beispielsweise weiteres in einem mobilen, batterie-, akkubetriebenem Gerät 24 (Handy, Smartphone, Handheld, PDA, Spielkonsole, Tablet) für eine Identifizierung von Fingerabdrücken eingesetzt sein. Die Einheit 6 aus Fingerabdruck-Sensor 21 und erster Elektrode 23 ist dabei z.B. in einem Eingabemittel - z.B. einer Bedientaste zum Aktivieren eines Displays 22 bzw. der Elektronik des mobilen Geräts 24 angeordnet bzw. integriert. Die Handablagefläche 7 mit der zumindest einen zweiten Elektrode 8 kann dabei - wie z.B. in Figur 7 dargestellt - an einer Seitenkante des mobilen Geräts 24 vorgesehen sein. Alternativ oder zusätzlich kann - wie in Figur 6 beispielhaft gezeigt - die Handablagefläche 7 mit der zumindest zweiten Elektrode 8 oder weitere Elektroden 8 auf einer Rückseite des mobilen Geräts 24 angeordnet sein. Beim Umgreifen des mobilen Geräts 24 mit der Hand 20 kommt z.B. der Daumen 12 auf dem Eingabemittel und damit auf der Einheit 6 aus Fingerabdruck-Sensor 21 und erster Elektrode 23 zu liegen, während die restlichen Finger der Hand 20 an die Handablagefläche 7 angelegt sind und damit die zumindest zweite Elektrode 8 von zumindest einem der restlichen Finger der Hand 20 berührt wird. Bei einer Anwendung der Erfindung in einem mobilen Gerät wie z.B. einem Smartphone oder Tablet PC kann die Messeinheit 25 z.B. in dieses Gerät eingebaut oder integriert sein.

Alternativ oder zusätzlich kann die Handablagefläche 7 bzw. die zumindest zweite Elektrode 8 auch in einer Schutzhülle für das mobile Gerät 24 angebracht sein bzw. in der Schutzhülle eine Durchkontaktierung zur Handablagefläche 7 bzw. zur zumindest zweiten Elektrode 8 vorgesehen sein. Es ist aber auch möglich, dass die Schutzhülle für das mobile Gerät 24 entsprechend ausgeschnitten ist, damit die Finger an die zumindest eine zweite Elektrode 8 angelegt werden können. Ein Nutzer des mobilen Geräts 24 muss dann für eine Identifizierung dieses idealerweise nicht aus der Schutzhülle herausnehmen bzw. die Schutzhülle nicht entfernen.

Figur 8 zeigt nochmals die Anordnung zur Identifizierung von Fingerabdrücken in schematischer Form als Blockbild sowie einen beispielhaften Ablauf eines Verfahrens zur Identifizierung von Fingerabdrücken mit der Anordnung. Die Anordnung weist, wie bereits anhand der vorangegangenen Figuren 2 bis 7 beschrieben, eine Einheit 6 bestehend aus einem Fingerabdruck-Sensor 21 und einer ersten Elektrode 23 auf. Diese Einheit 6 aus Fingerabdruck-Sensor 21 und erster Elektrode 23 ist einer Handablagefläche 7 mit zumindest einer zweiten Elektrode 8 zugeordnet bzw. beabstandet in Nachbarschaft zu dieser Handablagefläche 7 angeordnet. Alternativ kann der Fingerabdruck-Sensor 21 anstatt mit der ersten Elektrode 23 mit der zumindest zweiten Elektrode 8 eine Einheit 6 bilden, welche der Handablagefläche 7 zugeordnet ist, oder die zweite Elektrode 8 weist zusätzlich zur ersten Elektrode 23 einen weiteren Fingerabdruck-Sensor 21 auf. Weiterhin umfasst die Anordnung eine Messeinheit 25 zum Anlegen und Auswerten von elektrischen Signalen, welche zwischen der ersten Elektrode 23 und der zumindest zweiten Elektrode 8 anlegbar und erfassbar sind.

Werden z.B. Zeige-, Mittel-, Ring-, und/oder kleiner Finger einer Hand 20 auf der Handablagefläche 7 angelegt, so wird die zumindest zweite Elektrode 8 von einem dieser Finger berührt. Es können allerdings zusätzlich weitere zweite Elektroden 8 für einen weiteren oder mehrere bzw. alle angelegten Finger der Hand 20 in der Handablagefläche 7 vorgesehen sein. Die Zuordnung von der Handablagefläche 7 mit der zumindest zweiten Elektrode 8 und der ersten Elektrode 23 bzw. der Einheit 6 aus Fingerabdruck-Sensor 21 und erster Elektrode 23 ist derart ausgestaltet, dass beim Anlegen von Zeige-, Mittel-, Ring-, und/oder kleiner Finger der Hand 20 ein Daumen 12 dieser Hand 20 intuitiv und automatisch auf der Einheit 6 aus Fingerabdruck-Sensor 21 und erster Elektrode 23 zu liegen kommt. D.h. der Daumen 12 der Hand 20 wird an der Einheit 6 aus Fingerabdruck-Sensor 21 und erster Elektrode 23 und die restlichen Finger der Hand 20 werden auf der Handablagefläche mit zumindest einer zweiten Elektrode 8 angelegt.

In einem ersten Verfahrensschritt 31 wird vom Fingerabdruck-Sensor 21 der Einheit 6 ein Fingerabdruck des anliegenden Daumens 12 z.B. optisch oder elektrisch (meist kapazitiv) erfasst. Dazu kann z.B. eine Beleuchtungsvorrichtung für eine Bilderfassung aktiviert und der Fingerabdruck von der Fingerabdruck-Erfassungsvorrichtung mit einem Detektor zumindest ein Bereich des anliegenden Daumens als Fingerabdruck-Abbild erfasst werden. Alternativ kann der Fingerabdruck-Sensor 21 der zumindest zweiten Elektrode 8 zugeordnet sein, dann wird im ersten Verfahrensschritt 31 beispielsweise anstatt eines Daumenabdrucks ein Abdruck eines anderen Fingers erfasst, welcher an die zumindest zweite Elektrode 8 und damit an den der zumindest zweiten Elektrode 8 zugeordneten Fingerabdruck-Sensor angelegt ist. Das erfasste Fingerabdruck-Abbild kann dann beispielsweise in der Messeinheit 25 zwischengespeichert und in einem späteren Verfahrensschritt mit weiteren Daten oder sofort an ein übergeordnetes System - z.B. Computersystem für eine Qualitätsüberprüfung und/oder Auswertung weitergeleitet werden. Wird eine mangelhafte Qualität eines Fingerabdruck-Bildes wie z.B. zu geringer Bildkontrast, unzureichender Bereich des Fingerabdrucks, ungenügende Anzahl an Minutien-Punkten, etc. festgestellt, so kann z.B. ein zweites Fingerabdruck-Abbild vom Fingerabdruck-Sensor 21 erfasst werden.

Als weitere alternative Ausführungsform der Erfindung ist es auch möglich, dass die zweite Elektrode 8 zusätzlich zur Einheit 6 aus erster Elektrode 23 und Fingerabdruck-Sensor 21 einen weiteren Fingerabdruck-Sensor 21 aufweist. Dann kann beispielsweise im ersten Verfahrensschritt 31 zusätzlich zu einem Daumenabdruck, welcher von der Einheit 6 aus erster Elektrode 23 und Fingerabdruck-Sensor 21 erfasst wird, noch ein Abdruck eines weiteren Fingers der Hand 20 - wie z.B. des Zeigefingers - mittels des weiteren Fingerabdruck-Sensors 21, der der zweiten Elektrode 8 zugeordnet ist, erfasst werden.

Wenn eine akzeptable Bildqualität des erfassten Fingerabdrucks festgestellt worden ist, werden in einem zweiten Verfahrensschritt 32 von der Messeinheit 25 über die erste Elektrode 23 und die zumindest zweite Elektrode 8 elektrische Signale an die über den Daumen 21 und die restlichen Finger anliegenden Hand 20 übertragen bzw. eingespeist. Als elektrische Signale können beispielsweise Spannungssignale mit variabler Amplitude und/oder Frequenz verwendet werden. Diese eingespeisten Signale werden über die an den jeweiligen Elektroden anliegenden Finger bzw. die Hand 20 beispielsweise von der Messeinheit 25 über die erste Elektrode 23, eine Verbindung 26, welche von der Hand 20 gebildet wird, und die zumindest zweite Elektrode 8 wieder zur Messeinheit 25 oder in umgekehrter Richtung geleitet.

In einem dritten Verfahrensschritt 33 werden die elektrischen Signale, welche durch die an der ersten und zumindest einen zweiten Elektrode 23, 8 anliegenden Hand 20 (z.B. durch periodische Spannungsänderungen des Pulses, etc.) verändert werden, von der Messeinheit 25 erfasst. Die erste und die zumindest eine zweite Elektrode 23, 8 fungieren somit als Sende- und Empfangseinheiten für die elektrischen Signale. In der Messeinheit 25 werden dann die erfassten, veränderten elektrischen Signale weiterverarbeitet und ausgewertet. So kann beispielsweise auf Grund einer Reihe von elektrischen Signalen, die über die erste und die zumindest eine zweite Elektrode 23, 8 übertragen werden, eine Impedanzmessung einer Handstrecke 26 vom Daumen 12 bis zu einem der oder mehrerer Finger durchgeführt werden, wobei das Messergebnis dann z.B. mit einem vorgegebenen Messergebnis-Bereich verglichen wird. Es können aber auch nur die erfassten elektrischen Signale von der Messeinheit 25 mit einem vorgegebenen Bereich z.B. für Lebenderkennung charakteristischen Messbereich verglichen werden. Wenn die erfassten, elektrischen Signal innerhalb eines Schwellwertes z.B. von einer bestimmten Person, welche z.B. während einer Registrierung aufgenommen worden ist, oder innerhalb eines vorgegebenen Schwellwertes für Menschen allgemein gelegen sind, dann kann der detektierte Finger als real akzeptiert werden. D.h. der im ersten Verfahrensschritt 31 erfasste Fingerabdruck stammt mit sehr hoher Wahrscheinlichkeit von einer lebenden Person. Werden im dritten Verfahrensschritt 33 Abweichungen der erfassten, elektrischen Signale vom vorgegebenen Bereich festgestellt, so kann der detektierte Finger beispielsweise zur Fälschung (z.B. künstlicher oder abgetrennter Finger, auf den Finger aufgebrachte Folie mit gefälschtem Fingerabdruck, etc.) erklärt und der zugehörigen Person ein Zugriff, Zutritt, etc. verweigert werden.

Auf Basis des Vergleichs der erfassten, veränderten elektrischen Signale mit dem vorgegebenen Bereich kann beispielsweise von der Messeinheit 25 ein Fälschungswert erstellt werden. Dieser Fälschungswert kann beispielsweise dem detektierten Finger eine Wahrscheinlichkeit für eine Fälschung zuweisen. So kann z.B. ein geringer Wert des Fälschungswertes bedeuten, dass eine Wahrscheinlichkeit einer Fälschung gering; ein hoher Wert des Fälschungswertes, dass die Wahrscheinlichkeit einer Fälschung hoch ist.

Dieser Fälschungswert und/oder die erfassten, veränderten elektrischen Signale können in einem vierten Verfahrensschritt 34 beispielsweise gemeinsam mit dem durch den Fingerabdruck-Sensor 21 erfassten Fingerabdruck-Bild an das übergeordnete System für eine Auswertung und Analyse weitergeleitet werden. Das Fingerabdruck-Bild kann - wie beim ersten Verfahrensschritt 31 erläutert - auf seine Qualität geprüft werden. Die erfassten, veränderten elektrischen Signale und/oder der Fälschungswert können für die Lebenderkennung bzw. für eine Bewertung, ob der anliegende, detektierte Finger echt (d.h. von einer lebenden Person stammt) oder eine Fälschung ist, herangezogen werden. Wird keine Fälschung festgestellt, so kann das erfasste Fingerabdruckbild ausgewertet und die Person identifiziert werden.

In einer vorteilhaften Weiterbildung der Anordnung bzw. des Verfahren zur Identifikation von Fingerabdrücken kann zumindest die zweite Elektrode 8 als Krafteinwirkungs-Detektier-Einheit ausgeführt werden. Dabei werden die elektrischen Signale im zweiten Verfahrensschritt 32 erst bei einer mit dem entsprechenden Finger ausgeübten Krafteinwirkung von der Messeinheit 25 an die erste Elektrode 23 und die zumindest zweite Elektrode 8 angelegt, wobei von der Krafteinwirkung einen vorgegebenen Schwellwert erreicht werden muss. D.h. bei Erreichen des vorgegebenen Schwellwerts wird quasi ein elektrischer Schaltkreis von der Messeinheit 25 über die erste Elektrode 23, die anliegenden Hand 20 bzw. über die von dieser gebildeten Verbindung 26, die zumindest zweite Elektrode 8 zur Messeinheit 25 (oder in umgekehrte Richtung) geschlossen. Die Krafteinwirkungs-Detektier-Einheit in der zumindest zweiten Elektroden 8 weist dabei die Funktion eines Schalters auf, welcher bei einer ausreichend großen (= den Schwellwert erreichenden oder überschreitenden) Krafteinwirkung geschlossen wird.

Alternativ kann ein Anlegen der elektrischen Signale an die Elektroden 8, 23 bereits erfolgen, wenn die jeweiligen Elektroden 8, 23 von den jeweiligen Fingern - d.h. Daumen 12 und einem der anderen Finger - berührt werden - also wie wenn die zumindest zweite Elektrode 8 nicht als Krafteinwirkungs-Detektier-Einheit ausgeführt wäre. Allerdings wird das Erfassen und Auswerten der veränderten, elektrischen Signale gemäß dem dritten Verfahrensschritt 33 erst bei Erreichen oder Überschreiten des vorgegebenen Schwellwertes für die ausgeübte Krafteinwirkung auf die Krafteinwirkungs-Detektier-Einheit gestartet. D.h. die zumindest zweite Elektrode 8 bzw. die Krafteinwirkungs-Detektier-Einheit wirkt wie ein Schalter, durch den ein Abgreifen bzw. Auswerten der veränderten, elektrischen Signale durch die Messeinheit 25 bei entsprechend ausgeübter Krafteinwirkung gestartet wird.

Optional kann auch die Einheit 6 aus Fingerabdruck-Sensor 21 und erster Elektrode 23 als Krafteinwirkungs-Detektier-Einheit ausgeführt sein.

Die Krafteinwirkungs-Detektier-Einheit kann beispielsweise auf Federkraft-Rückstellung basieren bzw. als Druckschalter ausgeführt sein. Dann wird als Schwellwert für die Krafteinwirkungs-Detektier-Einheit vorteilhafterweise ein Federdruck-Schwellwert verwendet. Alternativ kann beispielsweise ein kraftmessender, elektrischer Widerstand wie z.B. ein so genannter Force-Sensing Resistor (FSR) verwendet werden. Die Krafteinwirkungs-Detektier-Einheit ist dann z.B. als Drucksensor ausgeführt, in der eine passive Komponente zur Verarbeitung eines variablen, elektrischen Widerstands verwendet wird, wobei mit zunehmender Krafteinwirkung auf den Sensor der Widerstandswert dieser Komponente verändert bzw. reduziert wird.

Erst wenn der entsprechende Schwellwert - z.B. Druck-Schwellwert oder der Schwellwert des elektrischen Widerstands - der Krafteinwirkungs-Detektier-Einheit erreicht oder überschritten wird, werden die elektrischen Signale von der Messeinheit 25 an die Elektroden 8, 23 angelegt oder abgegriffen bzw. ausgewertet. Weiterhin kann mit der Krafteinwirkungs-Detektier-Einheit eine Anzeigevorrichtung wie z.B. eine LED, etc. gekoppelt sein. Durch diese Anzeigevorrichtung kann z.B. durch Aufleuchten, Farbänderung, etc. dem Nutzer angezeigt werden, dass der entsprechende Schwellwert der Krafteinwirkungs-Detektier-Einheit und damit für eine Identifizierung des Fingerabdrucks erreicht worden ist, und eine weitere Krafteinwirkung auf die Krafteinwirkungs-Detektier-Einheit nicht mehr notwendig ist.

Durch die Ausgestaltung von zumindest der einen zweiten Elektrode 8 als Krafteinwirkungs-Einheit kann auf einfache Weise die Sicherheit gegen Manipulation zusätzlich erhöht werden. Denn beispielsweise mit einem mit einem nachgemachten, künstlichen Finger (z.B. Gummi-Finger) oder einer nachgemachten Hand (z.B. Gummi-Hand), auf welche Fingerabdrücke zu Manipulationszwecken aufbracht wurden, ist eine entsprechende Krafteinwirkung nicht ohne weiteres realisierbar.

## Patentansprüche

1. Eine Anordnung zur Identifikation von Fingerabdrücken, mit zumindest einem Fingerabdruck-Sensor (21) und zumindest zwei Elektroden, wobei mit dem Fingerabdruck-Sensor (21) ein Fingerabdruck erfassbar ist, wobei eine erste Elektrode (23) von einer Handablagefläche (7) beabstandet in der Nachbarschaft zu dieser Handablagefläche (7) derart angeordnet ist, dass bei Anlegen von Zeige-, und/oder Mittel-, und/oder Ring- und/oder kleinem Finger einer Hand (20) an dieser Handablagefläche (7) der Daumen (12) dieser Hand (20) an die erste Elektrode (23) legbar ist, wobei zumindest eine zweite Elektrode (8) derart auf der Handablagefläche (7) angebracht ist, dass zumindest ein Finger aus Zeige-, Mittel-, Ring- oder kleinem Finger auf der zweiten Elektrode (8) anlegbar ist, wobei die erste Elektrode (23) oder die zumindest eine zweite Elektrode (8) mit dem Fingerabdruck-Sensor (21) jeweils als Einheit (6) ausgeführt sind, oder wobei der Fingerabdruck-Sensor (21) und die erste Elektrode (23) und ein weiterer Fingerabdruck-Sensor (21) und die zumindest eine zweite Elektrode (8) jeweils als Einheit (6) ausgeführt sind, wobei eine Messeinheit (25) zum Anlegen und Auswerten von elektrischen Signalen, die zwischen den zumindest zwei Elektroden (8, 23) über die Hand (20) geleitet und durch die Hand (20) verändert werden, vorgesehen ist, wobei ein Identifikationsergebnis anhand des erfassten Fingerabdruckes und der erfassten veränderten, elektrischen Signale der Messeinheit (25) ermittelbar ist.

2. Die Anordnung nach Anspruch 1, ***dadurch gekennzeichnet, dass*** die Handablagefläche (7) als Handgriff ausgestaltet ist, der mit dem Zeige-, und/oder Mittel-, und/oder Ring- und/oder kleinem Finger der Hand (20) umgreifbar ist.

3. Die Anordnung nach Anspruch 1 oder 2, ***dadurch gekennzeichnet, dass*** die Handablagefläche (7) auf einer Gerätegehäuseseite (9) vorgesehen ist, welche zu einer weiteren Gerätegehäuseseite (10) geneigt, angeordnet ist, wobei die Einheit (6) aus Fingerabdruck-Sensor (21) und erste Elektrode (23) an der weiteren Gerätegehäuseseite (10) angebracht ist.

4. Die Anordnung nach Anspruch 3, ***dadurch gekennzeichnet, dass*** die beiden Gerätegehäuseseiten (9, 10) zueinander näherungsweise rechtwinkelig ausgerichtet sind.

5. Die Anordnung nach einem der Ansprüche 1 bis 4, ***dadurch gekennzeichnet, dass*** die Einheit (6) aus Fingerabdruck-Sensor (21) und erster Elektrode (23) beweglich relativ zur Handablagefläche (7) angeordnet, insbesondere drehbar und/oder kippbar und/oder translatorisch verschiebbar gelagert ist.

6. Die Anordnung nach einem der Ansprüche 1 bis 5, ***dadurch gekennzeichnet, dass*** die erste Elektrode (23) und die zumindest eine zweite Elektrode (8) aus einem lichtdurchlässigen Material hergestellt ist.

7. Die Anordnung nach einem der Ansprüche 1 bis 6, ***dadurch gekennzeichnet, dass*** die zumindest zweite Elektrode (8) als Krafteinwirkungs-Detektier-Einheit ausgeführt ist, wobei die elektrischen Signale von der Messeinheit (25) erst bei einer mit dem entsprechenden Finger ausgeübten Krafteinwirkung auf die Krafteinwirkungs-Detektier-Einheit an der jeweiligen Elektrode (8, 23) anlegbar oder abgreifbar/auswertbar sind.

8. Die Anordnung nach einem der Ansprüche 1 bis 7, ***dadurch gekennzeichnet, dass*** die Anordnung in einem Gerät (1), insbesondere Unterhaltungsspielgerät oder Spielautomat, und/oder in einem mobilen Gerät (24), insbesondere Smartphone, einsetzbar ist.

9. Ein Verfahren zur Identifikation von Fingerabdrücken mit einer Anordnung, welche zumindest einen Fingerabdruck-Sensor und zumindest zwei Elektroden (8, 23) sowie eine Messeinheit (25) umfasst, wobei eine erste Elektrode (23) oder zumindest eine zweite Elektrode (8) mit dem Fingerabdruck-Sensor (21) jeweils als Einheit (6) ausgeführt sind, oder wobei der Fingerabdruck-Sensor (21) und die erste Elektrode (23) und ein weiterer Fingerabdruck-Sensor (21) und die zumindest eine zweite Elektrode (8) jeweils als Einheit (6) ausgeführt sind, wobei ein Daumen (12) einer Hand (20) an die erste Elektrode (23) und zumindest ein weiterer Finger aus Zeige-, Mittel-, Ring- oder kleinem Finger an die zumindest eine zweite Elektrode (8) angelegt wird, wobei die zumindest eine zweite Elektrode (8) auf einer Handablagefläche (7) angeordnet ist, welche von der ersten Elektrode (23) beabstandet in Nachbarschaft angeordnet ist, wobei mit dem Fingerabdruck-Sensor (21) ein Fingerabdruck erfasst wird (31), wobei über die Elektroden (8, 23) von der Messeinheit (25) elektrische Signale an die über den Daumen und Finger angelegte Hand (20) übertragen werden (32), und dass dann die durch die an den Elektroden (8, 21; 23) anliegende Hand (20) veränderten, elektrischen Signale von der Messeinheit (25) erfasst und ausgewertet werden (33), wobei ein Identifikationsergebnis anhand des erfassten Fingerabdruckes und der erfassten veränderten, elektrischen Signale der Messeinheit ermittelt (25) wird (34).

10. Das Verfahren nach Anspruch 9, ***dadurch gekennzeichnet, dass*** ein erfasster Fingerabdruck an ein übergeordnetes System für eine Auswertung und Analyse weitergeleitet wird (34).

11. Das Verfahren nach Anspruch 9 oder 10, ***dadurch gekennzeichnet, dass*** von der Messeinheit (25) die erfassten, veränderten elektrischen Signale mit einem vorgegebenen Bereich verglichen werden (33).

12. Das Verfahren nach Anspruch 11, ***dadurch gekennzeichnet, dass*** auf Basis eines Vergleichs mit dem vorgegebenen Bereich von der Messeinheit (25) ein Fälschungswert erstellt wird (33).

13. Das Verfahren nach Anspruch 12, ***dadurch gekennzeichnet, dass*** der Fälschungswert für eine Auswertung von der Messeinheit (25) an das übergeordnete System weitergeleitet wird (34).

14. Das Verfahren nach einem der Ansprüche 9 bis 13, ***dadurch gekennzeichnet, dass*** als elektrische Signale Spannungssignale mit variabler Amplitude und/oder Frequenz eingesetzt werden (32, 33).

15. Das Verfahren nach einem der Ansprüche 9 bis 14, ***dadurch gekennzeichnet, dass*** die zumindest eine zweite Elektrode (8) als Krafteinwirkungs-Detektier-Einheit ausgeführt ist, dass die elektrischen Signale von der Messeinheit (25) erst bei einer mit dem entsprechenden Finger ausgeübten Krafteinwirkung auf die Krafteinwirkungs-Detektier-Einheit bei Erreichen oder Überschreiten eines vorgegebenen Schwellwertes für die ausgeübte Krafteinwirkung an der jeweiligen Elektrode (8, 23) angelegt (32) oder abgegriffen/ausgewertet (33) werden .

16. Das Verfahren nach Anspruch 15, ***dadurch gekennzeichnet, dass*** als Schwellwert für die Krafteinwirkungs-Detektier-Einheit ein Druck-Schwellwert oder ein Schwellwert für einen elektrischen Widerstand vorgegeben wird.

## Claims

1. Arrangement for identifying fingerprints having at least one fingerprint sensor (21) and at least two electrodes, wherein a fingerprint can be captured using the fingerprint sensor (21), wherein a first electrode (23) is arranged spaced apart from a hand resting surface (7) in the vicinity of said hand resting surface (7), in such a way that when the index finger and/or the middle finger and/or the ring finger and/or the little finger of a hand (20) is placed on this hand resting surface (7), the thumb (12) of this hand (20) can be placed on the first electrode (23), wherein at least a second electrode (8) is mounted on the hand resting surface (7) in such a way that at least one finger of the index finger, middle finger, ring finger or little finger can be placed on the second electrode (8), wherein the first electrode (23) or the at least one second electrode (8) is executed with the fingerprint sensor (21) as a unit (6) in each case, or wherein the fingerprint sensor (21) and the first electrode (23) and another fingerprint sensor (21) and the at least one second electrode (8) are each executed as a unit (6), wherein a measuring unit (25) is provided for applying and evaluating electrical signals that are conducted between the at least two electrodes (8, 23) through the hand (20) and are modified by the hand (20), wherein an identification result can be determined with the help of the captured fingerprint and the captured, modified electrical signals of the measuring unit (25).

2. Arrangement according to Claim 1, ***characterized in that*** the hand resting surface (7) is designed as a handle that can be gripped by the index finger and/or the middle finger and/or the ring finger and/or the little finger of the hand (20).

3. Arrangement according to Claim 1 or 2, ***characterized in that*** the hand resting surface (7) is provided on a device housing side (9) which is inclined towards another device housing side (10), wherein the unit (6) consisting of a fingerprint sensor (21) and a first electrode (23) is mounted on the other device housing side (10).

4. Arrangement according to Claim 3, ***characterized in that*** the two device housing sides (9, 10) are oriented roughly at right angles to one another.

5. Arrangement according to one of Claims 1 to 4, ***characterized in that*** the unit (6) consisting of a fingerprint sensor (21) and a first electrode (23) is arranged movably relative to the hand resting surface (7), particularly mounted so as to be rotatable and/or tiltable and/or translationally displaceable.

6. Arrangement according to any one of Claims 1 to 5, **characterized in that** the first electrode (23) and the at least one second electrode (8) is produced from a light-transmitting material.

7. Arrangement according to any one of Claims 1 to 6, **characterized in that** the at least second electrode (8) is designed as a force effect detection unit, wherein the electrical signals from the measuring unit (25) can only be applied or are accessed/evaluated when a force is exerted by the corresponding finger on the force effect detection unit at the respective electrode (8, 23).

8. Arrangement according to any one of Claims 1 to 7, **characterized in that** the arrangement can be used in a device (1), in particular an entertainment gaming device or slot machine, and/or in a mobile device (24), in particular a smartphone.

9. Method for identifying fingerprints having an arrangement comprising at least one fingerprint sensor and at least two electrodes (8, 23) and a measuring unit (25), wherein a first electrode (23) or at least one second electrode (8) is executed with the fingerprint sensor (21) as a unit (6) in each case, or wherein the fingerprint sensor (21) and the first electrode (23) and another fingerprint sensor (21) and the at least one second electrode (8) are each executed as a unit (6), wherein a thumb (12) of a hand (20) is placed on the first electrode (23) and at least one other finger of the index, middle, ring or little finger is placed on the at least one second electrode (8), wherein the at least one second electrode (8) is arranged on a hand resting surface (7) that is arranged spaced apart from the first electrode (23), wherein a fingerprint is detected (31) with the fingerprint sensor (21), wherein electrical signals are transmitted to the hand (20) placed over the thumb and finger via the electrodes (8, 23) by the measuring unit (25) (32), and then the electrical signals modified by the hand (20) applied to the electrodes (8, 21; 23) are detected and evaluated by the measuring unit (25) (33), wherein an identification result is determined with the help of the captured fingerprint and the captured, modified electrical signals by the measuring unit (25) (34).

10. Method according to Claim 9, **characterized in that** a detected fingerprint is forwarded to a higher-level system for evaluation and analysis (34).

11. Method according to Claim 9 or 10, **characterized in that** the detected, modified electrical signals are compared (33) with a predetermined range by the measuring unit (25).

12. Method according to Claim 11, **characterized in that** based on a comparison with the predetermined range, a forgery value is determined (33) by the measuring unit (25).

13. Method according to Claim 12, **characterized in that** the forgery value is forwarded (34) to the higher-level system for evaluation by the measuring unit (25).

14. Method according to any one of claims 9 to 13, **characterized in that** voltage signals with variable amplitude and/or frequency are used as electrical signals (32, 33).

15. Method according to any one of Claims 9 to 14, **characterized in that** the at least one second electrode (8) is designed as a force effect detection unit, that the electrical signals are applied (32) or accessed/evaluated (33) by the measuring unit (25) only when a force exerted by the corresponding finger on the force effect detection unit reaches, or exceeds, a predetermined threshold value for the force effect exerted on the respective electrode (8, 23).

16. Method according to Claim 15, **characterized in that** a pressure threshold or a threshold value for electrical resistance is predetermined as the threshold value for the force effect detection unit.

## Revendications

1. Système d'identification d'empreintes digitales, comprenant au moins un capteur d'empreinte digitale (21) et au moins deux électrodes, le capteur (21) permettant d'acquérir une empreinte digitale, une première électrode (23) étant disposée à distance d'une surface repose-main (7) au voisinage de ladite surface repose-main (7) de telle façon que lorsqu'on pose l'index et/ou le majeur et/ou l'annulaire et/ou l'auriculaire d'une main (20) sur ce repose-main (7), le pouce (12) de cette main (20) peut être placé sur la première électrode (23), au moins une deuxième électrode (8) étant disposée sur le repose-main (7) de telle façon qu'au moins un doigt parmi l'index, le majeur, l'annulaire ou l'auriculaire peut être placé sur la deuxième électrode (8), le capteur d'empreinte digitale (21) et la première électrode (23), ou la ou les deuxièmes électrodes (8) étant respectivement réalisés sous la forme d'un ensemble (6), ou le capteur d'empreinte digitale (21) et la première électrode (23) et un autre capteur d'empreinte digitale (21) et la ou les deuxièmes électrodes (8) étant respectivement réalisés sous la forme d'un ensemble (6),
une unité de mesure (25) servant à appliquer et à évaluer des signaux électriques conduits à travers la main (20) entre au moins les deux électrodes (8, 23) et modifiés par la main (20), un résultat d'identification pouvant être déterminé à l'aide de l'empreinte digitale détectée et des signaux électriques modifiés détectés de l'unité de mesure (25).

2. Système selon la revendication 1, **caractérisé en ce que** la surface repose-main (7) est conçue comme une poignée qui peut être saisie par l'index et/ou le majeur et/ou l'annulaire et/ou l'auriculaire de la main (20).

3. Système selon la revendication 1 ou 2, **caractérisé en ce que** la surface repose-main (7) est prévue sur un côté du boîtier de l'appareil (9), lequel est incliné vers un autre côté du boîtier de l'appareil (10), l'unité (6) constituée par le capteur d'empreinte digitale (21) et la première électrode (23) étant montées sur l'autre côté du boîtier de l'appareil (10).

4. Système selon la revendication 3, **caractérisé en ce que** les deux côtés du boîtier de l'appareil (9, 10) sont orientés de façon approximativement perpendiculaire l'un par rapport à l'autre.

5. Système selon l'une des revendications 1 à 4, **caractérisé en ce que** l'unité (6) composée du capteur d'empreintes digitales (21) et de la première électrode (23) est disposée de manière mobile par rapport à la surface repose-main (7), notamment montée de manière à pouvoir tourner et/ou basculer et/ou se déplacer en translation.

6. Système selon l'une des revendications 1 à 5, **caractérisé en ce que** la première électrode (23) et au moins une deuxième électrode (8) sont fabriquées à partir d'un matériau transmettant la lumière.

7. Système selon l'une des revendications 1 à 6, **caractérisé en ce que** la ou les deuxièmes électrodes (8) sont réalisées sous forme d'une unité de détection d'action de force, les signaux électriques ne pouvant être appliqués ou prélevés/évalués par l'unité de mesure (25) sur l'électrode respective (8, 23) qu'en cas d'action de force exercée avec le doigt correspondant sur l'unité de détection d'action de force.

8. Système selon l'une des revendications 1 à 7, **caractérisé en ce que** le système peut être utilisé dans un appareil (1), notamment un appareil de jeu de divertissement ou une machine à sous, et/ou dans un appareil mobile (24), notamment un smartphone.

9. Système d'identification d'empreinte digitale, comprenant au moins un capteur d'empreinte digitale et au moins deux électrodes (8, 23) ainsi qu'une unité de mesure (25), une première électrode (23) ou au moins une deuxième électrode (8) étant respectivement réalisée sous forme d'un système (6) avec le capteur d'empreinte digitale (21), le capteur d'empreinte digitale (21) et la première électrode (23) et un autre capteur d'empreinte digitale (21) et la ou les deuxièmes électrodes (8) étant respectivement réalisés sous forme d'un système (6), un pouce (12) d'une main (20) étant placé sur la première électrode (23) et au moins un autre doigt parmi l'index, le majeur l'annulaire ou l'auriculaire étant placés sur la ou les deuxièmes électrodes (8), la ou les deuxièmes électrodes (8) étant placées sur une surface repose-main (7), laquelle est disposée au voisinage de la première électrode (23), une empreinte digitale étant détectée (31) avec le capteur d'empreinte digitale (21),
l'unité de mesure (25) transmettant (32) des signaux électriques à la main (20) placée par l'intermédiaire du pouce et du doigt via les électrodes (8, 23) et en ce qu'ensuite l'unité de mesure (25) détecte et évalue (33) les signaux électriques modifiés par la main (20) appliquée sur les électrodes (8, 21 ; 23), un résultat d'identification étant déterminé (25) à l'aide de l'empreinte digitale détectée et des signaux électriques modifiés détectés de l'unité de mesure (34).

10. Procédé selon la revendication 9, **caractérisé en ce qu'**une empreinte digitale détectée est transmise à un système supérieur en vue d'être évaluée et analysée (34).

11. Procédé selon la revendication 9 ou 10, **caractérisée en ce que** l'unité de mesure (25) compare les signaux électriques modifiés détectés à une plage prédéterminée (33).

12. Procédé selon la revendication 11, **caractérisé en ce qu'**une valeur de falsification est établie par l'unité de mesure (25) sur la base d'une comparaison avec la plage prédéterminée (33).

13. Procédé selon la revendication 12, **caractérisé en ce que** la valeur de falsification est transmise par l'unité de mesure (25) au système supérieur pour une évaluation (34).

14. Procédé selon l'une des revendications 9 à13, **caractérisé en ce que** l'on utilise comme signaux électriques des signaux de tension d'amplitude et/ou de fréquence variables (32, 33).

15. Procédé selon l'une quelconque des revendications 9 à 14, **caractérisé en ce que** la ou les deuxièmes électrodes (8) sont réalisées sous forme de système de détection d'application de force, **en ce que** les signaux électriques sont appliqués (32) ou prélevés/évalués par l'unité de mesure (25) uniquement lors d'une application de force exercée avec le doigt correspondant sur l'unité de détection d'application de force lorsqu'une valeur seuil prédéfinie pour l'application de force exercée est atteinte ou dépassée (33) sur l'électrode respective (8, 23).

16. Procédé selon la revendication 15, **caractérisé en ce qu'**une valeur seuil de pression ou une valeur seuil de résistance électrique est prédéfinie comme valeur seuil pour l'unité de détection d'application de force.
